# EUROPÄISCHE PATENTSCHRIFT

(11) **EP 3 726 267 B1**
(45) Veröffentlichungstag und Bekanntmachung des Hinweises auf die Patenterteilung: **31.08.2022**
(21) Anmeldenummer: 20170183.6
(22) Anmeldetag: 17.04.2020
(51) Int. Cl.: G02B 6/44

(54) **EINZELROHRABDICHTUNG UND KUNSTSTOFFROHR**
SINGLE RAW SEAL AND PLASTIC PIPE
JOINT DE TUBE INDIVIDUEL ET TUBE EN MATIÈRE PLASTIQUE

(30) Priorität: 17.04.2019 DE 102019110180
(43) Veröffentlichungstag der Anmeldung: 21.10.2020
(73) Patentinhaber: gabo Systemtechnik GmbH, 94559 Niederwinkling (DE)
(72) Erfinder: Karl, Markus, 94327 Bogen (DE); Lederer, Roland, 94374 Schwarzach (DE); Geiger, Alexander, 94559 Niederwinkling (DE)
(74) Vertreter: Schmid, Nils T.F.

(56) Entgegenhaltungen:
- EP-A1- 2 796 910
- FR-A1- 2 946 117
- FR-A1- 3 047 809

## Beschreibung

Die Erfindung betrifft eine Einzelrohrabdichtung zum Montieren an einem Endabschnitt eines starren Kunststoffrohrs, wie eines Mikrorohrs. Ein Mikrorohr ist ein starres Kunststoffrohr, das einen zylindrischen Außendurchmesser von 5 mm bis 80 mm und eine Wandstärke von wenigstens 1 mm aufweisen kann. Das Kunststoffrohr hat einen Innenkanal zum Aufnehmen von wenigstens einem Datenkabel, wie einem Glasfaserkabel. Eine derartige Einzelrohrabdichtung ist aus DE 10 2011 103 367 A1 offenbart. Die vorliegende Erfindung betrifft außerdem ein Kunststoffrohr.

Die bekannte Einzelrohrabdichtung wird an einem Endabschnitt des starren Kunststoffrohres aufgesteckt, wobei ein zylindrischer Dichtungskörper von zwei Halbschalen umgeben wird. Der Dichtungskörper nimmt in seinem Innenraum den Endabschnitt des Kunststoffrohres auf und hat einen Fortsatz, der zum Freigeben einer Austrittsöffnung abtrennbar ist. Um radiale Dichtungskräfte zwischen dem Endabschnitt des Kunststoffrohres und der Innenseite des Dichtungskörpers aufzubauen, sind zwei Halbschalen, die formkomplementär ineinander greifen, vorgesehen, welche durch ein axiales Aufschieben einer sogenannten Schwalbenschwanzklemme radial aufeinander zu gedrängt werden, um den Dichtungskörper in Radialrichtung zu quetschen. Bei dieser bewährten, bekannten Einzelrohrabdichtung ist bei der Herstellung eine relativ hohe Fertigungsgenauigkeit in der Radialabmessung bereitzustellen, damit eine zuverlässige Dichtung mittels der elastischen Verformung des Dichtungskörpers erreicht wird. Zudem ist die Teileanzahl aufgrund der Schwalbenschwanzklemme und den Halbschalen relativ hoch.

FR 2 946 117 betrifft eine Vorrichtung für den Anschluss von Schutzrohren eines Glasfaserkabels.Es ist Aufgabe der Erfindung, die Nachteile des Standes der Technik zu überwinden, insbesondere eine konstruktive einfach zu realisierende Einzelrohrabdichtung zum

Montieren an einen Endabschnitt eines starren Kunststoffrohres bereitzustellen, die einfach zu montieren und demontieren ist sowie eine ausreichende Dichtigkeit gegenüber dem in dem Kunststoffrohr geführten Datenkabel sicherstellt.

Diese Aufgabe wird durch die Merkmale von Anspruch 1 bzw. 16 gelöst. Danach ist eine Einzelrohrabdichtung oder eine Einzelzugabdichtung zum Montieren an einen Endabschnitt eines starren Kunststoffrohrs, wie eines Mikrorohrs, vorgesehen. Das Kunststoffrohr hat einen Innenkanal zum Aufnehmen von wenigstens einem Datenkabel, wie einem Glasfaserkabel. Ferner kann das Kunststoffrohr eine starre Rohrstruktur aufweisen, um das Datenkabel vor äußeren Schlägen zu schützen. Dabei kann die Wandstärke des Kunststoffrohrs wenigstens 0,5 mm bei einem Außendurchmesser von weniger als 25 mm und/oder von mindestens 3 mm betragen. Um die Starrheit des Kunststoffrohrs zu erhöhen, kann die Wandstärke wenigstens 1 mm, 1,5 mm oder 2 mm betragen.

Die Einzelrohrabdichtung umfasst eine zumindest teilzylindrische, vorzugsweise vollzylindrische, Stülphülse. Die Teilzylindrigkeit kann insbesondere dadurch realisiert sein, dass die Hülsenstruktur als solche stets zylindrisch ist, allerdings Aussparungen, wie Schlitze, oder Oberflächenprofilierungen besitzen kann, so dass die Hülsenstruktur von der vollständigen Zylindrigkeit abweicht. Die Stülphülse kann auch abschnittsförmig zylindrisch sein, wobei beispielsweise ein nichtzylindrischer Abschnitt an den zylindrischen Abschnitt anschließen kann, der beispielsweise dazu geformt ist, mit Verteilkästen oder -muffen verbunden zu werden. Die Stülphülse umfasst ein starres Material, wie Kunststoff oder ein Leichtmetall, z.B. Aluminium, wodurch insbesondere eine ausreichende Biegeflexibilität sichergestellt ist und andererseits eine Stabilität gewährleistet ist, so dass der Innenkanal zur Aufnahme des Datenkabels im Wesentlichen stets eine zylindrische Innenform behält, um das Datenkabel gegen äußere Einflüsse zu schützen. Der zylindrische Innenkanal kann durchaus im Rahmen einer elastischen Verbiegung im Querschnitt geändert werden, wobei die zylindrische Grundform beibehalten wird. Die Stülphülse umfasst ferner einen Innenraum, in den der Endabschnitt vorzugsweise axial einsteckbar ist. Der Innenraum der Stülphülse kann bezüglich der Außenabmessung des Endabschnitts des Kunststoffrohrs formangepasst sein und/oder derart dimensioniert sein, dass der Endabschnitt bei undeformierter Stülphülse flächig mit dieser in Kontakt gerät. Die Stülphülse kann beispielsweise eine Wandstärke von wenigstens 0,5 mm besitzen, vorzugsweise um der Stülphülse die benötigte Starrheit zu verleihen. Ferner umfasst die Stülphülse eine Einstecköffnung zum axialen Einführen des Endabschnitts in den Innenraum, der im montierten Zustand des Endabschnitts von letzterem vollständig belegbar sein kann. Der Einstecköffnung gegenüberliegend ist eine Austrittsöffnung vorgesehen, durch die hindurch sich das Datenkabel aus dem Innenraum axial erstrecken kann. Vorzugsweise besitzt die Austrittsöffnung eine Abmessung, die gerade etwas größer als die Abmessung des isolierten oder unisolierten Datenkabels ist.

Des Weiteren umfasst die erfindungsgemäße Einzelrohrabdichtung einen elastisch verformbaren Dichtungskörper, der über die Einstecköffnung in den Innenraum eingesetzt ist. Beispielsweise ist der Dichtungskörper aus einem Elastomermaterial gebildet. Der Dichtungskörper kann eine Pfropfenstruktur besitzen und/oder im Wesentlichen rotationsförmig gebildet sein. Eine Außenabmessung des Dichtungskörpers ist vorzugsweise an eine Innenabmessung der Stülphülse angepasst. Der Dichtungskörper besitzt einen dem Innenkanal des Kunststoffrohres zugewandten Stirnabschnitt, kegelstumpfförmig oder kegelförmig gebildet ist. Der Stirnabschnitt kann dazu geformt sein, den Innenkanal abzudichten. Ferner kann der Dichtungskörper eine Durchführöffnung für das Datenkabel aufweisen, durch die hindurch sich das Datenkabel axial erstrecken kann, vorzugsweise um die Stülphülse an der Austrittsöffnung axial zu verlassen.

Erfindungsgemäß umfasst die Einzelrohrabdichtung eine axial über die Einstecköffnung teilweise in den Innenraum eingesetzte Halte- und Freigabeeinrichtung. Die Halte- und Freigabeeinrichtung kann einen Passivzustand einnehmen, indem diese eine radiale Haltekraft auf das Kunststoffrohr ausübt, um das Kunststoffrohr axial festzuhalten. Dadurch wird ein ungewolltes Demontieren des Kunststoffrohrs aus der Einzelrohrabdichtung verhindert. Des Weiteren ist die Halte- und Freigabeeinrichtung derart betätigbar, dass die radiale Haltekraft im Wesentlichen aufgehoben ist, um das Kunststoffrohr freizugeben. Um das Kunststoffrohr somit von der Einzelrohrabdichtung zu demontieren, insbesondere aus der Stülphülse axial herauszuziehen, ist die Halte- und Freigabeeinrichtung zu betätigen, wodurch die radiale Haltekraft aufgehoben wird, so dass das Kunststoffrohr einfach und ohne erhöhten Kraftaufwand zu demontieren ist. Dadurch ist eine konstruktiv einfach realisierte Einzelrohrabdichtung geschaffen, bei der das Kunststoffrohr auf einfache Weise montierbar und demontierbar ist und bei der die Dichtigkeit gegenüber dem Kunststoffrohr und dem in dem Kunststoffrohr angeordneten Datenkabel nicht beeinträchtigt ist. Ferner wurde herausgefunden, dass es die erfindungsgemäße Einzelrohrabdichtung erlaubt, die einzelnen Komponenten besonders klein, also wenig Bauraum beanspruchend, auszuführen. Dies hat sich insbesondere in Bezug auf die zunehmenden Anforderungen an hohe Packungsdichten von Mikrorohren, beispielsweise in Verteilerkästen oder -muffen gerecht zu werden. Ferner verstärkt die kleine Bauweise die vereinfachte Montage und Demontage der erfindungsgemäßen Einzelrohrabdichtung.

In einer beispielhaften Ausführung ist die Halte- und Freigabeeinrichtung derart betätigbar, dass das Kunststoffrohr vorzugsweise bei aneinander montierter Stülphülse und Halte- und Freigabeeinrichtung von der Stülphülse demontierbar ist. Beispielsweise ist die Halte- und Freigabeeinrichtung derart betätigbar, dass das Kunststoffrohr aus dem Innenraum axial herausziehbar ist, ohne dass die Halte- und Freigabeeinrichtung von der Stülphülse zu demontieren ist. Somit kann auf einfache Weise das in dem Innenraum der Einzelrohrabdichtung angeordnete Kunststoffrohr demontiert werden und auf einfache Weise mittels eines anderen Kunststoffrohrs wiederbelegt werden, vorzugsweise ohne dass es notwendig ist, die Halte- und Freigabeeinrichtung von der Stülphülse zu demontieren.

Gemäß einer beispielhaften Weiterbildung ist im Bereich der Austrittsöffnung an der Stülphülse ein Radialanschlag für das Kunststoffrohr und/oder den Dichtungskörper vorgesehen, der ein axiales Verschieben des in dem Innenraum eingesteckten Endabschnitts des Kunststoffrohrs bzw. des Dichtungskörpers begrenzt. Insbesondere soll der Radialanschlag verhindern, dass das im unmontierten Zustand freie Ende des Endabschnitts nicht über den Radialanschlag hinaus, insbesondere axial aus der Austrittsöffnung hervor, verschoben werden kann. Auf diese Weise ist die axiale Position des Kunststoffrohrs und/oder des Dichtungskörpers in der Stülphülse festgelegt. Des Weiteren hat der Radialanschlag, der beispielsweise als Radialwand ausgebildet ist und sich beispielsweise von einer Innenseite der Stülphülse nach radial innen erstrecken kann, die Austrittsöffnung, durch die hindurch sich das Datenkabel, das sich im Innenkanal des Kunststoffrohrs befindet, aus dem Innenraum axial heraus erstrecken kann. Gemäß einer Weiterbildung der erfindungsgemäßen Einzelrohrabdichtung ist zum Aufbau der Abdichtung der Dichtungskörper zwischen dem Radialanschlag und dem Endabschnitt des Kunststoffrohrs axial verpresst. Beispielsweise ist zum Aufbau der Abdichtung, insbesondere eines umlaufenden Abdichtungskontaktes zwischen dem Stirnabschnitt und dem Innenkanal bzw. dem Endabschnitt des Kunststoffrohres, der Dichtungskörper zwischen dem Radialanschlag und dem Endabschnitt axial zusammengedrückt und/oder gepresst. Somit wird ein ausreichender Dichtungseffekt zwischen Endabschnitt und Dichtungskörper sowie zwischen Dichtungskörper und Datenkabel sichergestellt.

In einer weiteren beispielhaften Ausführung der erfindungsgemäßen Einzelrohrabdichtung weist die Stülphülse einen Längsschlitz auf, längs dem das Kunststoffrohr durch radiales Einsetzen in die Stülphülse derart verlegbar ist, dass es an der Einstecköffnung, im Verlauf der Gesamtlängserstreckung der Stülphülse und im Bereich der Austrittsöffnung im Wesentlichen parallel zur Längsachse der Stülphülse liegt. Beispielsweise erstreckt sich der Längsschlitz vollständig längs der Stülphülse und/oder ist bezüglich des Radialanschlags derart radial geformt, dass der Längsschlitz in die Austrittsöffnung mündet. Längs dem Längsschlitz kann das Datenkabel durch radiales Einsetzen in die Stülphülse derart verlegbar sein, dass es sich koaxial zur Längsachse der Stülphülse erstreckt, insbesondere ohne von dem Verlauf der Längsachse der Stülphülse abzuweichen.

In einer beispielhaften Weiterbildung der vorliegenden Erfindung weist die Halte- und Freigabeeinrichtung ein Krallenteil mit wenigstens einer nach Innen ragenden Kralle zum Ausüben der radialen Haltekraft bezüglich des Kunststoffrohrs auf. Die wenigstens eine Kralle kann derart elastisch deformierbar sein und/oder derart elastisch an dem Krallenteil, wie einem ringförmigen Krallenteil, angebracht sein, dass beim Einsetzen des Kunststoffrohrs in das Krallenteil die wenigstens eine Kralle unter Ausbildung einer Deformationsrückstellkraft aufgespreizt ist, insbesondere um die radiale Haltekraft aufzuheben und ein Demontieren des Kunststoffrohrs aus der Stülphülse zu erlauben.

Gemäß einer beispielhaften Weiterbildung weist das Krallenteil einen Durchführkanal für das Kunststoffrohr auf, durch den sich das Kunststoffrohr axial hindurcherstrecken kann, wobei insbesondere beim Hindurchführen des Kunststoffrohrs durch das Krallenteil die radiale Haltekraft aufgebaut wird. Des Weiteren kann das Krallenteil eine Längsschlitzung besitzen, längs der das Kunststoffrohr vorzugsweise unter elastischer Deformation, insbesondere Aufspreizung, des Krallenteils durch radiales Einsetzen in das Krallenteil derart verlegbar ist, dass es längs des Krallenteils im Wesentlichen parallel zu dessen Längsachse verläuft, die vorzugsweise in montiertem Zustand der Halte- und Freigabeeinrichtung an der Stülphülse koaxial zu der Längsachse der Stülphülse liegt. Gemäß einer beispielhaften Weiterbildung besitzen der Längsschlitz der Stülphülse und die Längsschlitzung des Krallenteils im montierten Zustand die gleiche Umfangsdimension, vorzugsweise Breite, und/oder sind im Wesentlichen fluchtend zueinander angeordnet, vorzugsweise so dass das Kunststoffrohr längs der Längsschlitzung und des Längsschlitzes radial in die Stülphülse und das Krallenteil verlegbar ist, bzw. Stülphülse und Krallenteil radial auf das Kunststoffrohr aufsteckbar sind.

Gemäß einer beispielhaften weiteren Ausführung der vorliegenden Erfindung ist eine in Umfangsrichtung gemessene Weite des Längsschlitzes und gegebenenfalls der Längsschlitzung entlang der Längserstreckung der Stülphülse und gegebenenfalls des Krallenteils im Wesentlichen konstant. Anders ausgedrückt verlaufen zwei einander zugewandte, den Längsschlitz begrenzende Schlitzgrenzflächen der Stülphülse parallel zueinander und/oder in Richtung der Längsachse der Stülphülse. Beispielsweise beträgt die in Umfangsrichtung bemessene Weite des Längsschlitzes und gegebenenfalls der Längsschlitzung 30% bis 80% bezüglich eines Außendurchmessers der Stülphülse. Durch diese bevorzugte Dimensionierung des Längsschlitzes und gegebenenfalls der Längsschlitzung wird bei Ermöglichung der vorteilhaften Montage und Demontage der erfindungsgemäßen Einzelrohrabdichtung eine ausreichende Stabilität der Einzelrohrabdichtung sichergestellt. Beispielsweise liegt ein Außendurchmesser der Stülphülse im Bereich von 5 mm bis 15 mm und/oder beträgt vorzugsweise 7 mm, 10 mm, 12 mm oder 14 mm. Dabei kann eine Umfangsweite des Längsschlitzes und gegebenenfalls der Längsschlitzung im Bereich von 3 mm bis 11 mm liegen und/oder beispielsweise 3,5 mm, 7 mm, 8,5 mm oder 10 mm betragen.

In einer weiteren beispielhaften Weiterbildung der erfindungsgemäßen Einzelrohrabdichtung ist das Krallenteil im Wesentlichen als Ring ausgebildet, von dessen Innenmantel sich die wenigstens eine Kralle im undeformierten Zustand unter einem Winkel im Bereich von 30° bis 90° bezüglich der Längsrichtung der Stülphülse in den Durchführkanal erstreckt. Somit ist sichergestellt, dass beim Einführen, insbesondere axialen Einstecken, des Kunststoffrohrs in die Stülphülse und damit durch das Krallenteil hindurch die wenigstens eine Kralle die radiale Haltekraft auf das Kunststoffrohr ausübt.

In einer weiteren beispielhaften Ausführung der vorliegenden Erfindung ist die wenigstens eine Kralle mittels eines Filmscharniers an dem Innenmantel des Krallenteils angebracht und/oder als im Wesentlichen rechteckige Lasche geformt. Beispielsweise kommt eine Laschenoberfläche mit dem montierten Kunststoffrohr teilweise in Kontakt. Bei einer beispielhaften Weiterbildung der vorliegenden Erfindung ist eine Vielzahl von in Umfangsrichtung gleichmäßig verteilten und in einem Abstand zueinander angeordneten Krallen zur Bildung eines Krallenrings an dem Krallenteil angeordnet. Beispielsweise wird die radiale Haltekraft gleichmäßig durch die Vielzahl von Krallen aufgebracht.

In einer weiteren beispielhaften Ausführung der erfindungsmäßigen Einzelrohrabdichtung umfasst die Halte- und Freigabeeinrichtung eine Lösehülse zum Freigeben des Kunststoffrohrs von der Stülphülse. Insbesondere wirkt die Lösehülse derart mit dem Krallenteil zusammen, dass die Lösehülse bei dessen Betätigung axial in Richtung des Krallenteils verschoben wird, um die wenigstens eine Kralle zu betätigen, insbesondere derart zu betätigen, dass die radiale Haltekraft im Wesentlichen aufgehoben ist. Beispielsweise betätigt die Lösehülse das Krallenteil derart, dass die wenigstens eine Kralle nach radial außen aufgespreizt ist. Dabei kann es vorgesehen sein, dass bei Betätigung der Halte- und Freigabeeinrichtung die Lösehülse axial derart weit verschoben wird, dass die Lösehülse in der Axialrichtung in den Bereich der wenigstens einen Kralle, vorzugsweise über die wenigstens eine Kralle axial hinaus, verschoben werden kann, vorzugsweise so dass die wenigstens eine Kralle derart nach außen gedrückt bzw. aufgespreizt ist, dass die wenigstens eine Kralle nur noch geringfügig bezüglich der Längsachse der Stülphülse geneigt ist oder sogar im Wesentlichen parallel zur Längsachse orientiert ist, so dass die radiale Haltekraft der wenigstens einen Kralle auf das Kunststoffrohr aufgehoben ist.

In einer weiteren beispielhaften Ausführung der erfindungsgemäßen Einzelrohrabdichtung umfasst die Lösehülse einen im Wesentlichen hohlzylindrischen Zylinderabschnitt zum Betätigen der wenigstens einen Kralle. Beispielsweise besitzt der Zylinderabschnitt einen stirnseitigen Betätigungsring mit einem sich zur Stirnseite hin verjüngenden Querschnitt, der vorzugsweise durch eine geneigte Außenfläche am Betätigungsring gebildet ist, zum kontinuierlichen Aufspreizen der wenigstens einen Kralle. Ferner kann die Lösehülse an der anderen Stirnseite einen stirnseitigen, dem Krallenteil abgewandten Betätigungsflansch zum manuellen Betätigen der Lösehülse umfassen. Beispielsweise besitzt der Betätigungsflansch eine plane Druckauflagefläche, die nach außen gewandt ist, und/oder erstreckt sich umlaufend, radial von dem Zylinderabschnitt weg.

Gemäß einer beispielhaften Weiterbildung der erfindungsgemäßen Einzelrohrabdichtung umfasst die Halte- und Freigabeeinrichtung eine Führungshülse zum axialen Führen der Lösehülse und vorzugsweise zum axialen Halten des Krallenteils. Beispielsweise besitzt die Führungshülse eine stirnseitige Aufnahme, wie eine umlaufende Aufnahmerille oder -nut, zum Aufnehmen des Krallenteils. Die Aufnahme kann außerdem einen stirnseitig, nach Innen in Richtung der Längsachse geneigten Halteflansch zum axialen Sichern des Krallenteils in der Führungshülse besitzen. Dadurch ist eine axiale Position des Krallenteils in der Führungshülse festgelegt. Des Weiteren kann die Führungshülse an einem Innenumfang einen Radialvorsprung besitzen, der eine axiale Relativbewegung von Führungshülse und Lösehülse begrenzt und/oder mit einem am Außenumfang der Lösehülse, insbesondere des Betätigungsabschnitts, ausgebildeten Radialabsatz zusammenwirkt, um einen Axialanschlag zu bilden. Beispielsweise ist dabei vorgesehen, dass Radialvorsprung und Radialabsatz bei unbetätigter Halte- und Freigabeeinrichtung in Kontakt miteinander stehen, während bei Betätigung der Halte- und Freigabeeinrichtung, insbesondere der Lösehülse, sich zunehmend ein Abstand, insbesondere Axialabstand, zwischen Radialabsatz und Radialvorsprung aufbaut.

In einer weiteren beispielhaften Ausführung der vorliegenden Erfindung besitzt die Führungshülse abschnittsweise einen vorzugsweise im Wesentlichen konstanten Durchmesser, der an einen Innendurchmesser der Stülphülse angepasst ist. Beispielsweise erfolgt die Montage der erfindungsgemäßen Einzelrohrabdichtung derart, dass die Führungshülse in die Stülphülse eingesteckt ist, vorzugsweise derart eingesteckt ist, dass eine Relativrotation von Führungshülse und Stülphülse verhindert ist. Dies kann beispielsweise durch formschlüssiges Ineinandergreifen von Stülphülse und Führungshülse realisiert sein.

Gemäß einer beispielhaften Weiterbildung der vorliegenden Erfindung besitzt die Stülphülse unter Ausbildung einer Auflageschulter für einen Dichtungsring, der vorzugsweise lose auf der umlaufenden Auflageschulter aufliegt, einen Profilsprung. Dabei kann vorgesehen sein, dass sich der Innendurchmesser der Stülphülse sprunghaft reduziert und/oder die Auflageschulter im Wesentlichen senkrecht zum Innenmantel der Stülphülse orientiert ist. Beispielsweise ist die Führungshülse im Bereich des größeren Innendurchmessers montiert und/oder unmittelbar dem Dichtungsring zugewandt. Dies bedeutet, dass keine weiteren Komponenten notwendig sind, um die erfindungsgemäße Halte- und Freigabeeinrichtung zu realisieren.

Gemäß einer beispielhaften Weiterbildung umfasst die Halte- und Freigabeeinrichtung einen Sicherungsring zum Unterbinden einer Betätigung der Halte- und Freigabeeinrichtung. Dabei kann vorgesehen sein, dass bei montiertem Sicherungsring eine Betätigung der Halte- und Freigabeeinrichtung zwar möglich ist, allerdings die radiale Haltekraft bezüglich des Kunststoffrohrs nicht aufgehoben wird, insbesondere die Lösehülse nicht dazu veranlasst wird, sich axial relativ zu dem Krallenteil zu bewegen, um die wenigstens eine Kralle zu deformieren, insbesondere aufzuspreizen, und damit die radiale Haltekraft zu lösen. Beispielsweise ist der Sicherungsring in einem sich zwischen einer Stirnfläche der Führungshülse und dem Betätigungsflansch der Lösehülse ergebenden Ringraum angeordnet. Beispielsweise belegt der Sicherungsring den Ringraum im Wesentlichen vollständig, um ein axiales Verschieben der Lösehülse relativ zu der Führungshülse zu verhindern. Beispielsweise ist der Sicherungsring derart bezüglich eines Außendurchmessers der Lösehülse dimensioniert, dass der Sicherungsring im montierten Zustand eine radiale Haltekraft auf die Lösehülse ausübt und/oder radial elastisch deformierbar ist, um von der Lösehülse demontierbar zu sein, vorzugsweise um die axiale Relativbewegung der Lösehülse zu gewährleisten. Der Sicherungsring kann an den Umfangsenden Betätigungsösen auffassen aufweisen, anhand denen der Benutzer den Sicherungsring aufspreizen kann, um diesen von der Einzelrohrabdichtung zu lösen.

Gemäß einer beispielhaften Weiterbildung der erfindungsgemäßen Einzelrohrabdichtung ist die Halte- und Freigabeeinrichtung, insbesondere die Führungshülse, derart auf die Stülphülse formabgestimmt, dass eine Rotation der Stülphülse relativ zu der Halte- und Freigabeeinrichtung verhindert ist. Beispielsweise wird dies durch formschlüssige Eingriffselemente an Kunststoffrohr und Halte- und Freigabeeinrichtung erreicht, die beim vorzugsweise axialen Einsetzen des Kunststoffrohrs in die Halte- und Freigabeeinrichtung in einen Eingriff gelangen, um die Relativrotation zu verhindern.

In einer weiteren beispielhaften Ausführung der erfindungsgemäßen Einzelrohrabdichtung umfasst der Dichtungskörper einen an den Stirnabschnitt anschließenden, im Wesentlichen zylindrischen Grundkörper. Der Stirnabschnitt ist als kegel- oder kegelstumpfförmiger Trichterabschnitt geformt.

Die Durchführöffnung in dem Dichtungskörper ist beispielsweise mittig angeordnet und/oder verläuft in Axialrichtung parallel, vorzugsweise koaxial, zur Längsachse der Stülphülse. Beispielsweise dient die Durchführöffnung dazu, das Datenkabel vollständig zu umgreifen. Gemäß einer beispielhaften Weiterbildung ist der Dichtungskörper, vorzugsweise der Grundkörper und der Trichterabschnitt, in Längsrichtung geschlitzt, um in Radialrichtung an ein Datenkabel montierbar zu sein oder um ein Datenkabel radial einzusetzen. Auf diese Weise ist das Datenkabel durch eine ausschließlich radiale Montagebewegung in die Durchführöffnung einsetzbar. Ein aufwendiges axiales Einführen und Einschieben des Datenkabels in die Durchführöffnung kann vermieden werden. Im Montagezustand kann der Dichtungslängsschlitz derart gegenüber dem Längsschlitz der Stülphülse und gegebenenfalls der Längsschlitzung der Halte- und Freigabeeinrichtung angeordnet sein, dass er in Umfangsrichtung weder mit dem Längsschlitz noch mit der Längsschlitzung zusammenfällt und/oder wenigstens abschnittsweise überlappt. Der Dichtungskörper kann jedoch derart in der Stülphülse aufgenommen sein, dass eine Rotation des Dichtungskörpers um die Stülphülsenlängsachse ermöglicht ist, um den Dichtung Längsschlitz mit Längsschlitz bzw. Längsschlitzung mindestens abschnittsweise zu überlassen, damit eine radiale Demontage bzw. Montage eines mit einem Datenkabel belegten Kunststoffrohrs gewährleistet ist. Beispielsweise ist eine Längsabmessung des Grundkörpers größer bemessen als eine Längsabmessung des Trichterabschnitts. Dadurch kann eine einfache manuelle Handhabung des Dichtungskörpers erreicht werden, da der zylindrische Grundkörper gut mit den Fingern durch eine Bedienperson ergriffen werden kann.

Gemäß einer beispielhaften Weiterbildung ist der Dichtungskörper derart dimensioniert, dass beim Aufschieben des Endabschnitts des Kunststoffrohrs auf den Trichterabschnitt der Dichtungskörper, insbesondere im Wesentlichen der Grundkörper, axial komprimiert und radial ausgedehnt wird. Insbesondere wird der Grundkörper derart radial ausgedehnt, dass eine Radialverpressung des Grundkörpers mit einem Innenumfang der Stülphülse realisiert ist. Der Grundkörper dient demnach außerdem dazu, eine Dicht- und/oder Führungsfläche innerhalb der Stülphülse bereitzustellen. Des Weiteren erlaubt es die zylindrische Außenfläche, die beim Montieren des Kunststoffrohrs gegen den Innenumfang der Stülphülse verpresst wird, und somit eine Pressfläche bildet, eine erhöhte Dichtungswirkung innerhalb der Stülphülse zu realisieren. Ferner kann eine Verkantung des Dichtungselements innerhalb der Stülphülse vermieden werden, da eine großflächige Auflage- und/oder Pressfläche zwischen Dichtungskörper und Stülphülse gebildet ist.

In einer weiteren beispielhaften Ausführung der erfindungsgemäßen Einzelrohrabdichtung ist die Einzelrohrabdichtung dazu ausgebildet, eine Dichtigkeit zwischen Dichtungskörper und Kunststoffrohr und/oder zwischen Dichtungskörper und Datenkabel gegenüber einem Innendruck, vorzugsweise gegen eine Flüssigkeit, von bis zu 1 bar, vorzugsweise bis zu 0,75 bar, vorzugsweise bis zu 0,5 bar, innerhalb des Kunststoffrohrs bereitzustellen. Zur Dichtigkeitsprüfung kann die Einzelrohrabdichtung mit montiertem Kunststoffrohr und gegebenenfalls Datenkabel unter Wasser gehalten und mit einem gewünschten Innendruck, beispielsweise von 0,5 bar, in dem Kunststoffrohr beaufschlagt werden.

Gemäß einem weiteren Aspekt der vorliegenden Erfindung, der mit den vorhergehenden Aspekten und beispielhaften Ausführungen kombinierbar ist, ist ein Kunststoffrohr, wie ein Mikrorohr, bereitgestellt. Das Kunststoffrohr umfasst einen Innenkanal zum Aufnehmen von wenigstens einem Datenkabel, wie einem Glasfaserkabel, und eine gemäß einem der zuvor beschriebenen Aspekte oder beispielhaften Ausführungsformen ausgebildete Einzelrohrabdichtung, die an einem Endabschnitt des Kunststoffrohrs montiert ist. Ferner kann das Kunststoffrohr eine starre Rohrstruktur aufweisen, um das Datenkabel vor äußeren Schlägen zu schützen. Dabei kann die Wandstärke des Kunststoffrohrs wenigstens 0,5 mm bei einem Außendurchmesser von weniger als 25 mm und/oder von mindestens 3 mm betragen. Um die Starrheit des Kunststoffrohrs zu erhöhen, kann die Wandstärke wenigstens 1 mm, 1,5 mm oder 2 mm betragen. Dadurch ist ein konstruktiv einfach realisiertes Kunststoffrohr geschaffen, das auf einfache Weise an eine Einzelrohrabdichtung montierbar und von dieser demontierbar ist, und das eine hohe Dichtigkeit innerhalb der Einzelrohrabdichtung und zwischen dem in dem Kunststoffrohr angeordneten Datenkabel und der Einzelrohrabdichtung bereitstellt.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine perspektivische Ansicht einer erfindungsgemäßen montierten Einzelrohrabdichtung;
- Fig. 2: eine perspektivische Ansicht einer Halte- und Freigabeeinrichtung einer erfindungsgemäßen montierten Einzelrohrabdichtung;
- Fig. 3: eine Schnittansicht der Halte- und Freigabeeinrichtung gemäß Fig. 2;
- Fig. 4: eine perspektivische Ansicht eines Dichtungskörpers einer erfindungsgemäßen Einzelrohrabdichtung,
- Fig. 5: eine perspektivische Ansicht einer Lösehülse der Halte- und Freigabeeinrichtung gemäß Fig. 2;
- Fig. 6: eine perspektivische Ansicht einer Führungshülse der Halte- und Freigabeeinrichtung gemäß Fig. 2;
- Fig. 7: eine perspektivische Ansicht eines Krallenteils der Halte- und Freigabeeinrichtung gemäß Fig. 1;
- Fig. 8: eine perspektivische Ansicht einer weiteren Ausführung einer Halte- und Freigabeeinrichtung einer erfindungsgemäßen Einzelrohrabdichtung;
- Fig. 9: eine Schnittansicht der Halte- und Freigabeeinrichtung nach Fig. 8 gemäß der Linie IX-IX; und
- Fig. 10: eine perspektivische Ansicht eines Dichtungskörpers gemäß einer weiteren beispielhaften Ausführung einer erfindungsgemäßen Einzelrohrabdichtung.

In der folgenden Beschreibung beispielhafter Ausführungen von erfindungsgemäßen Einzelrohrabdichtungen ist eine erfindungsgemäße Einzelrohrabdichtung im Allgemeinen mit der Bezugsziffer 1 versehen. Die Einzelrohrabdichtung 1 ist im Wesentlichen aus einem Kunststoff-Material hergestellt, das eine ausreichende Steifigkeit und einen ausreichenden Schutz gegenüber äußeren Einflüssen sicherstellt, wobei beispielsweise auch vorgesehen sein kann, dass wenigstens komponentenweise ein Leichtmetall, wie Aluminium, als Material verwendet wird.

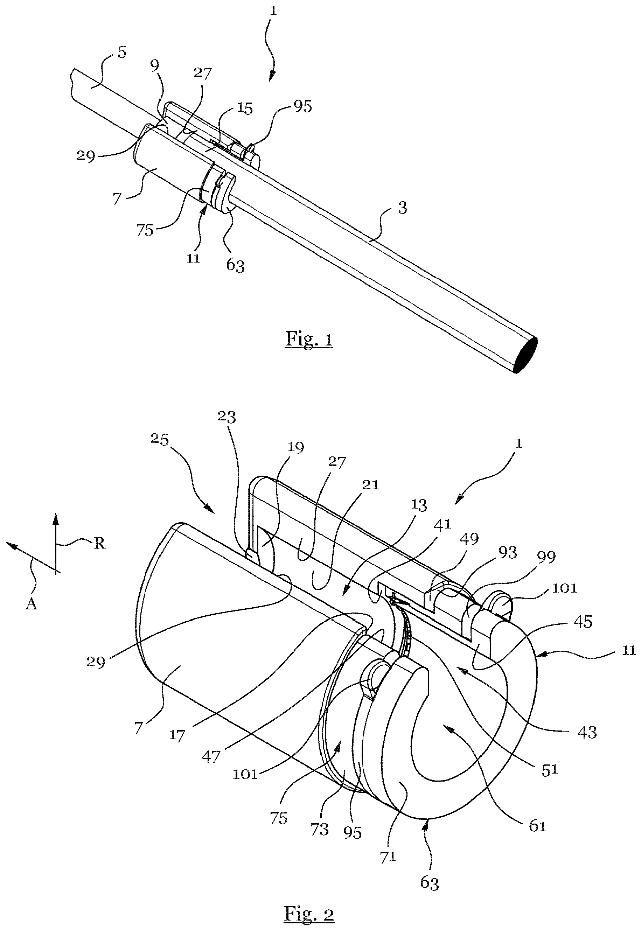

In Fig. 1 ist der Montagezustand der erfindungsgemäßen Einzelrohrabdichtung abgebildet, bei dem ein Kunststoffrohr 3 axial in die Einzelrohrabdichtung 1 eingesetzt ist und ein in einem nicht dargestellten Innenkanal des Kunststoffrohrs 3 aufgenommenes Datenkabel 5, wie ein Glasfaserkabel, sich zur anderen Axialseite axial aus der Einzelrohrabdichtung 1 heraus erstreckt. In Fig. 1 sind im Wesentlichen die Hauptkomponenten einer erfindungsgemäßen Einzelrohrabdichtung 1 abgebildet, auf die unter Bezugnahme auf die folgenden Figuren näher eingegangen wird: eine Stülphülse 7; ein Dichtungskörper 9; und eine Halte- und Freigabeeinrichtung 11.

In Fig. 2 ist die erfindungsgemäße Einzelrohrabdichtung 1 vergrößert dargestellt, wobei das Kunststoffrohr 3, das Datenkabel 5 und der Dichtungskörper 9 aus Gründen der Veranschaulichung weggelassen wurden. Die Stülphülse 7 ist hohlzylindrisch ausgebildet und aus einem starren Material, vorzugsweise, Kunststoff hergestellt und definiert einen Innenraum 13, in dem ein Endabschnitt 15 (Fig. 1) des Kunststoffrohrs 3 einsteckbar ist. Das Kunststoffrohr 3 kann axial über eine Einstecköffnung 17 axial in den Innenraum 13 eingeführt werden. Ein axiales Verschieben des in dem Innenraum 13 angeordneten Endabschnitts 15 des Kunststoffrohrs 3 wird durch einen Radialanschlag 19 begrenzt, der sich von einem Innenmantel 21 der Stülphülse im Bereich eines der Einstecköffnung 17 axial gegenüberliegenden Endes der Stülphülse 7 nach radial Innen erstreckt, vorzugsweise im Wesentlichen senkrecht bezüglich der Innenumfangsfläche 21 der Stülphülse 7. Die Stülphülse 7 besitzt eine der Einstecköffnung 17 gegenüberliegende Austrittsöffnung 23, durch die hindurch sich das Datenkabel 5 aus dem Innenraum 13 axial erstrecken kann. Wie aus Fig. 2 ersichtlich ist, ist die Austrittsöffnung 23 im Wesentlichen in dem Radialanschlag 19 ausgebildet, der die Stülphülse 7 stirnseitig zumindest teilweise abschließt. Die Stülphülse 7 umfasst einen in Axialrichtung A, das heißt in Längsrichtung der Stülphülse 7, orientierten Längsschlitz 25 konstanter Umfangsweite bzw. -breite. Längs dem Längsschlitz 25 kann das Kunststoffrohr durch radiales Einsetzen in die Stülphülse 7 verlegt werden. Dabei ist klar, dass beim radialen Einsetzen des Kunststoffrohrs 3 in den Innenraum 13 der Stülphülse 7 die Stülphülse 7 unter Weitung des Längsschlitzes 25 aufgeweitet, insbesondere aufgespreizt wird, um das radiale Einsetzen des Kunststoffrohrs 3 zu ermöglichen. Sobald das Kunststoffrohr in der Stülphülse 7 montiert ist (Fig. 1), kann sich die Stülphülse 7 wieder zurückdeformieren, um die Umfangsweite bzw. Breite des Längsschlitzes 25 zu reduzieren, so dass das Kunststoffrohr 3 in einer zur Axialrichtung A quer, vorzugsweise senkrecht, orientierten Radialrichtung R nicht aus dem Innenraum 13 entfernt werden kann. Der Längsschlitz 25 wird in Umfangsrichtung durch zwei einander gegenüberliegende und im Wesentlichen parallel zueinander, und vorzugsweise in Axialrichtung A, orientierte Schlitzgrenzflächen 27, 29 begrenzt, die zu einer Stirnseite hin in die Einstecköffnung 17 und zur anderen Stirnseite hin in die Austrittsöffnung 23 münden.

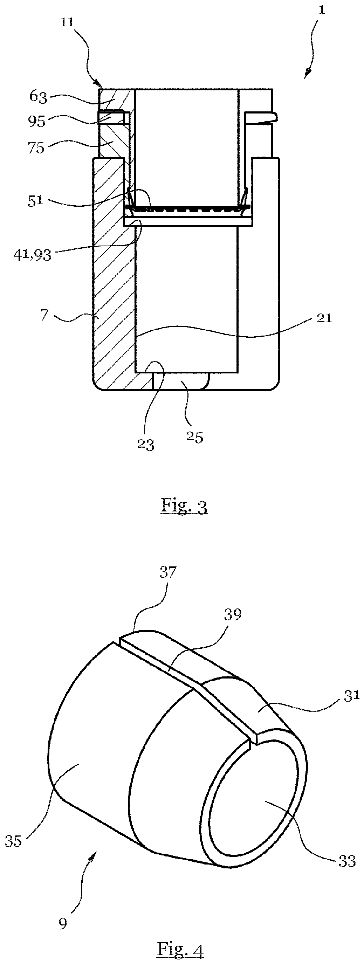

Eine beispielhafte Ausführung eines Dichtungskörpers 9 ist in Fig. 4 abgebildet. Der Dichtungskörper 9 umfasst einen dem Innenkanal des Kunststoffrohrs 3 im Montagezustand zugewandten Stirnabschnitt 31, der zum Abdichten des Innenkanals geformt ist. Ferner umfasst der Dichtungskörper 9 eine Durchführöffnung 33 für das in dem Kunststoffrohr 3 geführte Datenkabel 5. Die Durchführöffnung 33, die auch als Dichtungskanal bezeichnet werden kann, erstreckt sich vollständig entlang der Längsachse des Dichtungskörpers 9 durch diesen hindurch und dient dazu, das Datenkabel 5 im Wesentlichen umfänglich zu umgreifen. Der Stirnabschnitt 31 ist als kegel- oder kegelstumpfförmiger Trichterabschnitt geformt. Dies hat zum einen den Vorteil, dass derselbe Dichtungskörper für unterschiedliche Kunststoffrohrinnendurchmesser verwendbar ist und zum anderen, dass durch ein axiales Verpressen zwischen Dichtungskörper 9 und Kunststoffrohr 3 der Trichterabschnitt 31 zunehmend in das Kunststoffrohr 3 eingeschoben und sich an dessen Innenumfangsfläche anpresst, um die Dichtigkeit zwischen Dichtungskörper 9 und Kunststoffrohr 3 zu erhöhen. Der Dichtungskörper 9 umfasst außerdem einen an den Stirn- bzw. Trichterabschnitt 31 anschließenden, im Wesentlichen zylindrischen Grundkörper 35, dessen Längsabmessung größer dimensioniert ist als die Längsabmessung des Stirn- bzw. Trichterabschnitts 31. An einer dem Stirnabschnitt 31 gegenüberliegenden Stirnseite des Dichtungskörpers 9 ist eine im Wesentlichen ebene axiale Anschlag- bzw. Pressfläche 37 vorgesehen, mittels der der Dichtungskörper 9 in dem Innenraum 13 der Stülphülse gegen den Radialanschlag 19 zum Aufbau der Abdichtung zwischen Dichtungskörper 9 und Kunststoffrohr 3 axial verpresst ist. Die Anordnung des Dichtungskörpers 9 ist in Fig. 1 verdeutlicht, wobei der Stirnabschnitt 31 nur teilweise zu sehen ist, da dieser teilweise durch das Kunststoffrohr 3 verdeckt ist.

Erneut bezugnehmend auf Fig. 4 ist zu erkennen, dass der Dichtungskörper 9 in Längsrichtung, das heißt in Haupterstreckungsrichtung des Dichtungskörpers 9, vollständig geschlitzt ist, um in Radialrichtung R, das heißt quer, vorzugsweise senkrecht, zur Längsrichtung, an ein Datenkabel 5 montierbar zu sein oder um ein Datenkabel 5 radial in die Durchführöffnung 33 des Dichtungskörpers 9 einzusetzen. Der Dichtungskörper 9, der im Wesentlichen aus Elastomermaterial besteht, ist elastisch deformierbar. Daher kann der Dichtungslängsschlitz 39 eine geringe Umfangsweite bzw. Breite besitzen, um die radiale Montage des Datenkabels 5 zu erlauben. Beim radialen Einsetzen eines Datenkabels 5 in den Dichtungskörper 9 bzw. beim radialen Montieren des Dichtungskörpers 9 an ein bereits verlegtes Datenkabel 5 wird der Dichtungskörper 9 im Bereich des Dichtungslängsschlitzes 39 in Umfangsrichtung geweitet, wie aufgespreizt, unter elastischer Deformation desselben bis zu einer Umfangsweite des Dichtungslängsschlitzes 39, die im Wesentlichen dem Außendurchmesser des Datenkabels 5 entspricht. Sobald das Datenkabel 5 in dem Dichtungskörper, insbesondere in der Durchführöffnung 33, aufgenommen ist, kann die elastische Deformation des Dichtungskörpers 9 aufgehoben werden, so dass der Dichtungslängsschlitz 39 wieder verengt wird, um ein radiales Entnehmen des Datenkabels 5 zu verhindern.

Unter Zusammenschau der Fig. 1, 2 und 4 wird deutlich, dass der Dichtungskörper 9 axial über die Einstecköffnung 17 in den Innenraum 13 eingesetzt werden kann und axial innerhalb des Innenraums 13 in Richtung der Austrittsöffnung 23 verschoben werden kann, bis die Anschlagfläche 37 des Dichtungskörpers 9 mit dem Radialanschlag 19 in Kontakt gerät. In dieser Position ist die axiale Anordnung des Dichtungskörpers 9 bezüglich der Stülphülse 7 festgelegt. Wird anschließend ein Kunststoffrohr 3 ebenfalls über die Einstecköffnung 17 in den Innenraum 13 eingeschoben (Fig. 1), fährt der Endabschnitt 15 des Kunststoffrohrs 3 kontinuierlich über den Stirnabschnitt 31 bis zu einem Zeitpunkt, zu dem der Außendurchmesser des Trichterabschnitts 31 im Wesentlichen dem Innendurchmesser des Endabschnitts 15 des Kunststoffrohrs 3 entspricht. Zur Erhöhung der Dichtigkeit kann das Kunststoffrohr in Axialrichtung A derart weit auf den Dichtungskörper 9, insbesondere auf den Trichterabschnitt 31 aufgeschoben werden, so dass dieser, insbesondere sich dessen Grundkörper 35, axial komprimiert und unter radialer Ausdehnung sich gegen einen Innenumfang 21 der Stülphülse 7 radial verpresst. Der ausgeprägte zylindrische Grundkörper 35 kann die Handhabung/Montage durch das Bedienpersonal deutlich erleichtern, da eine ausgeprägte Greiffläche bereitgestellt ist. Ferner dient die Grundkörperaußenfläche 35 auch als Dicht- und/oder Führungsfläche innerhalb der Stülphülse 7. Daher wird die Dichtigkeit der erfindungsgemäßen Einzelrohrabdichtung 1 erhöht. Zum anderen wird beim axialen Einsetzen des Dichtungskörpers 9 über die Einstecköffnung 17 das axiale Verschieben innerhalb der Stülphülse 7 durch die aufgrund der ausgeprägten zylindrischen Umfangsfläche des Grundkörpers 35 gegebene Führungsfläche erleichtert, so dass das Bedienpersonal nicht darauf zu achten hat, die richtige Ausrichtung des Dichtungskörpers 9 innerhalb der Stülphülse einzustellen, da sich diese im Wesentlichen automatisch ergibt, nämlich als koaxiale Ausrichtung bezüglich der Stülphülse 7. Des Weiteren wurde noch ein zusätzlicher Vorteil durch die ausgeprägte zylindrische Grundkörperfläche 35 dahingehend identifiziert, dass diese eine große Pressfläche zum Anpressen an den Innenumfang 21 der Stülphülse 7 beim axialen Verpressen mittels des Kunststoffrohrs 3 und des Radialanschlags 19 bietet. Daher kann eine Verkantung des Dichtungskörpers 9 innerhalb der Stülphülse 7 vermieden werden. Es wurde herausgefunden, dass die Einzelrohrabdichtung 1 auf diese Weise eine Dichtigkeit zwischen Dichtungskörper 9 und Kunststoffrohr 3 bzw. Dichtungskörper 9 und Datenkabel 5 gegenüber einem Innendruck von bis zu 0,5 bar innerhalb des Kunststoffrohrs 3 bereitzustellen vermag.

Erneut bezugnehmend auf Fig. 2 ist die Halte- und Freigabeeinrichtung 11 im montierten Zustand an der Stülphülse 7 dargestellt. Die Halte- und Freigabeeinrichtung 11 dient im Allgemeinen dazu, in einem Passivzustand eine radiale Haltekraft auf das Kunststoffrohr 3 auszuüben, um das Kunststoffrohr 3 axial festzuhalten, und in einem Betätigungszustand, in dem die Halte- und Freigabeeinrichtung 11 beispielsweise durch eine Bedienperson manuell betätigt ist, die radiale Haltekraft im Wesentlichen aufzuheben, um das Kunststoffrohr 3 freizugeben und ein Demontieren des Kunststoffrohrs 3 bei aneinander montierter Stülphülse 7 und Halte- und Freigabeeinrichtung 11 zu erlauben. In dem in Fig. 1 dargestellten Montagezustand befindet sich die Halte- und Freigabeeinrichtung 11 im Passivzustand, das heißt eine radiale Haltekraft ist auf das Kunststoffrohr 3 ausgeübt. Wird die Halte- und Freigabeeinrichtung 11 nun betätigt, welche Funktionsweise weiter unten im Detail beschrieben wird, kann das Kunststoffrohr 3 axial aus der Einstecköffnung 17 herausgezogen werden, und zwar ohne, dass Stülphülse 7 und Halte- und Freigabeeinrichtung 11 voneinander zu demontieren sind. Die Halte- und Freigabeeinrichtung 11 kann derart auf die Stülphülse 7 formabgestimmt sein, dass eine Rotation der Stülphülse 7 relativ zu der Halte- und Freigabeeinrichtung 11 verhindert ist. Dies wird beispielsweise durch einen formschlüssigen Eingriff zwischen Stülphülse 7 und Halte- und Freigabeeinrichtung 11 realisiert. Die Halte- und Freigabeeinrichtung 11, die teilweise axial in die Stülphülse 7 eingeschoben wird, ist in ihrer axialen Position durch einen Radialabsatz 41 am Innenmantel 21 der Stülphülse 7 festgelegt.

Wie in Fig. 2 ersichtlich ist, umfasst die Halte- und Freigabeeinrichtung 11 eine Längsschlitzung 43, wobei in der Montageposition der Halte- und Freigabeeinrichtung 11 an der Stülphülse 7 die Längsschlitzung 43 und der Längsschlitz 25 die gleiche Umfangsorientierung besitzen und/oder zueinander fluchtend angeordnet sind, so dass ein Kunststoffrohr 3 und/oder ein Datenkabel 5 selbst bei aneinander montierter Stülphülse 7 und Halte- und Freigabeeinrichtung 11 radial einsetzbar ist. In Umfangsrichtung wird die Längsschlitzung 43 durch zwei einander zugewandte Schlitzgrenzflächen 45, 47 begrenzt, die im Wesentlichen parallel zueinander orientiert sind und in Längsrichtung der Stülphülse 7 liegen, welche einer axialen Einsetzrichtung des Kunststoffrohrs 3 in die Stülphülse 7 entspricht. Wenigstens eine der Schlitzgrenzflächen 45, 47, vorzugsweise beide, wird von einem Radialvorsprung 49 der Stülphülse 7 derart umgriffen, dass eine Relativrotation zwischen Halte- und Freigabeeinrichtung 11 und Stülphülse 7 vermieden ist. Des Weiteren ist durch die derart gebildete formschlüssige Verdrehsicherung, die auch auf andere Weise ausgebildet sein kann, zwischen Stülphülse 7 und Halte- und Freigabeeinrichtung 11 eine definierte Montageorientierung der Halte- und Freigabeeinrichtung 11 relativ zu der Stülphülse 7 festgelegt, nämlich derart, dass die Längsschlitzung 43 und der Längsschlitz 25 aufeinander ausgerichtet und/oder zueinander fluchtend orientiert sind. Es ist zu erkennen, dass eine Umfangsweite der Längsschlitzung 43 im Wesentlichen der Umfangsweite des Längsschlitzes 25 entspricht und entlang der Axialrichtung A im Wesentlichen konstant ist.

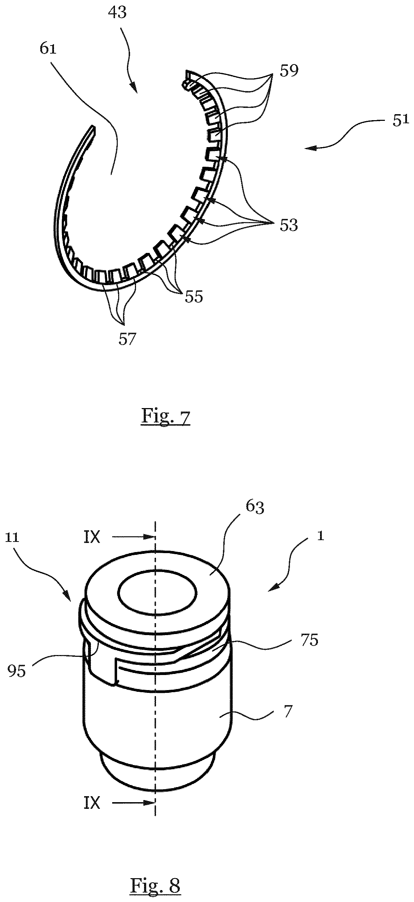

Die Halte- und Freigabeeinrichtung 11 umfasst eine Krallenteil 51 mit wenigstens einer Kralle 53, die sich von einem Innenumfang 55 des als Ring geformten Krallenteils 51 nach radial innen ragt, vorzugsweise unter einem Winkel im Bereich von 30° bis 90° bezüglich der Längsrichtung der Stülphülse 7. Das Krallenteil 51 ist in perspektivischer Ansicht isoliert in Fig. 7 abgebildet und weist eine Vielzahl von in Umfangsrichtung gleichmäßig verteilten und in einem Abstand zueinander angeordneten Krallen 53 auf, so dass im Wesentlichen ein Krallenring 51 gebildet ist. Die wenigstens eine Kralle 53, bzw. die Vielzahl von Krallen 53, sind elastisch deformierbar und/oder derart elastisch an dem Krallenteil 51 angebracht, dass beim Einsetzen des Kunststoffrohrs 3 in das Krallenteil 51 die wenigstens eine Kralle 53 unter Ausbildung einer Deformationsrückstellkraft aufgespreizt wird. Dies kann dadurch realisiert sein, dass die wenigstens eine Kralle 53 bzw. die Vielzahl der Krallen 53 mittels eines Filmscharniers 57 an den Innenmantel 55 des Krallenteils 51 angebracht ist/sind. In Fig. 7 ist außerdem zu erkennen, dass die Kralle 53 als im Wesentlichen rechteckige Lasche geformt ist, dessen eine, dem Kunststoffrohr 3 zugewandte Laschenoberfläche 59 mit dem Außenumfang des Kunststoffrohrs 3 in Kontakt geraten kann, um die radiale Haltekraft auf das Kunststoffrohr 3 auszuüben. Über die Längsschlitzung 43 ist auch ein radiales Einsetzen des Kunststoffrohrs 3 in einen von dem Krallenteil 51 begrenzten Durchführkanal 61 möglich, dessen Dimensionierung aufgrund der nach Innen ragenden Krallen 53 im Vergleich zu den weiteren Komponenten der Halte- und Freigabeeinrichtung 11 reduziert ist.

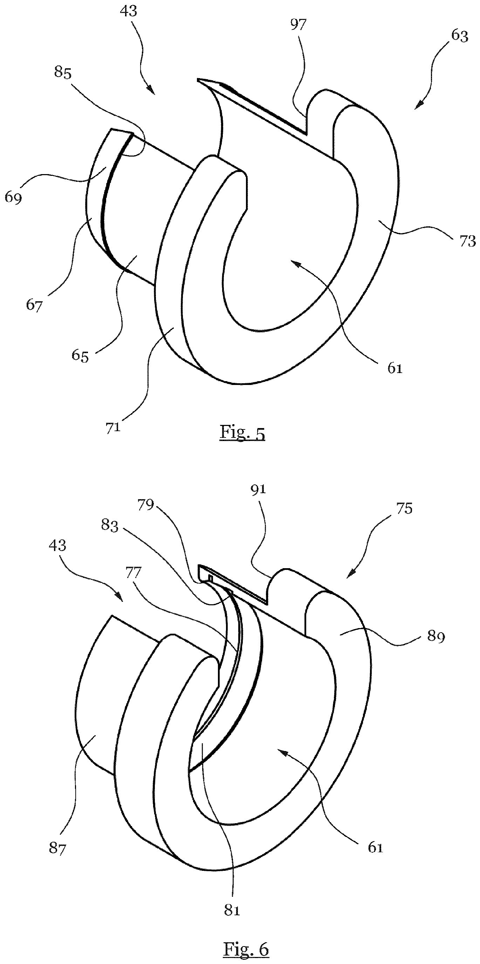

Die Halte- und Freigabeeinrichtung 11 umfasst außerdem eine Lösehülse 63, die im Montagezustand in den Fig. 2 und 3 abgebildet ist und isoliert in perspektivischer Ansicht in Fig. 5. Die Lösehülse 63 dient dazu, das Kunststoffrohr 3 von der Stülphülse 7 freizugeben, das heißt die Demontage des Kunststoffrohrs 3 von der Stülphülse 7 zu ermöglichen. Um dies zu erreichen, wirkt die Lösehülse 63 derart mit dem Krallenteil 51 zusammen, dass die Lösehülse 63 bei Betätigung der Lösehülse 63 axial in Richtung des Krallenteils 51 verschoben wird, um die wenigstens eine Kralle 53 zu betätigen. Bei Betätigung der wenigstens einen Kralle 53, wird diese nach radial außen gedrückt, vorzugsweise aufgespreizt, so dass die radiale Haltekraft im Wesentlichen aufgehoben ist und das Kunststoffrohr 3 aus Einstecköffnung 17 und aus dem Durchführkanal 61 herausziehbar ist. Bezugnehmend auf Fig. 5 ist ersichtlich, dass die Lösehülse 63 einen im Wesentlichen hohlzylindrischen Zylinderabschnitt 65 zum Betätigen der wenigstens einen Kralle 53 besitzt. Der Zylinderabschnitt 65 kann einen stirnseitigen Betätigungsring 67 aufweisen, der einen sich zur Stirnseite hin verjüngenden Querschnitt zum kontinuierlichen Aufspreizen der wenigstens einen Kralle besitzt. Dies kann beispielsweise dadurch realisiert sein, dass, wie es in Fig. 5 abgebildet ist, der Betätigungsring 67 eine bezüglich der Längsrichtung geneigte Außenfläche 69 besitzt, dessen Außendurchmesser kontinuierlich zunimmt. Des Weiteren umfasst die Lösehülse 63 einen stirnseitigen, dem Krallenteil 51 im Montagezustand abgewandten Betätigungsflansch 71 zum manuellen Betätigen der Lösehülse 63 durch eine Bedienperson. Der Betätigungsflansch 71 erstreckt sich im Wesentlichen umlaufend, radial von dem Zylinderabschnitt 65 nach außen und weist eine stirnseitige ebene Druckfläche 73 für das Bedienpersonal auf.

Die Halte- und Freigabeeinrichtung 11 weist ferner eine Führungshülse 75 auf, die in den Figuren 2 und 3 im Montagezustand und in Fig. 6 in isolierter perspektivischer Ansicht abgebildet ist. Die Führungshülse 75 dient zum axialen Führen der Lösehülse 63 bei dessen Betätigung. Ferner dient die Führungshülse 75 dazu, das Krallenteil 51 axial zu halten. Die Führungshülse 75 weist eine innenseitige im Bereich einer Stirnseite ausgebildete Aufnahme 77 zum Aufnehmen des Krallenteils 51 auf. Die Aufnahme 77 kann als umlaufende Halterille oder Haltenut gebildet sein. Stirnseitig mündet die Aufnahme 77 in einen bezüglich der Längsachse geneigten Halteflansch 79 zum axialen Sichern des Krallenteils 51 in der Führungshülse 75. Die Führungshülse 75 ist im Wesentlichen hohlzylindrisch ausgebildet. An einem Innenumfang 81 der Führungshülse 75 besitzt diese einen Radialvorsprung 83, der eine axiale Relativbewegung von Führungshülse 75 und Lösehülse 63 begrenzt. Dazu wirkt der Radialvorsprung 83 mit einem am Außenumfang der Lösehülse 63, insbesondere des Zylinderabschnitts 65, vorzugsweise unmittelbar angrenzend an den Betätigungsring 67, ausgebildeten Radialabsatz 85 zusammen, um einen Axialanschlag zu bilden. Wie insbesondere in der Schnittansicht gemäß Fig. 3 dargestellt ist, in der die an der Stülphülse 7 montierte Halte- und Freigabeeinrichtung 11 in dem Passivzustand sich befindet, sind Radialvorsprung 83 und Radialabsatz 85 in Kontakt miteinander. Erneut bezugnehmend auf Fig. 6 umfasst die Führungshülse 75 einen im Wesentlichen zylindrischen Hülsenabschnitt 87, der die Aufnahme 77, den Radialvorsprung 83 und den Halteflansch 79 umfasst, sowie einen zylindrischen Endabschnitt 89, dessen Wandstärke deutlich größer bemessen ist als die Wandstärke des zylindrischen Hülsenabschnitts 87.

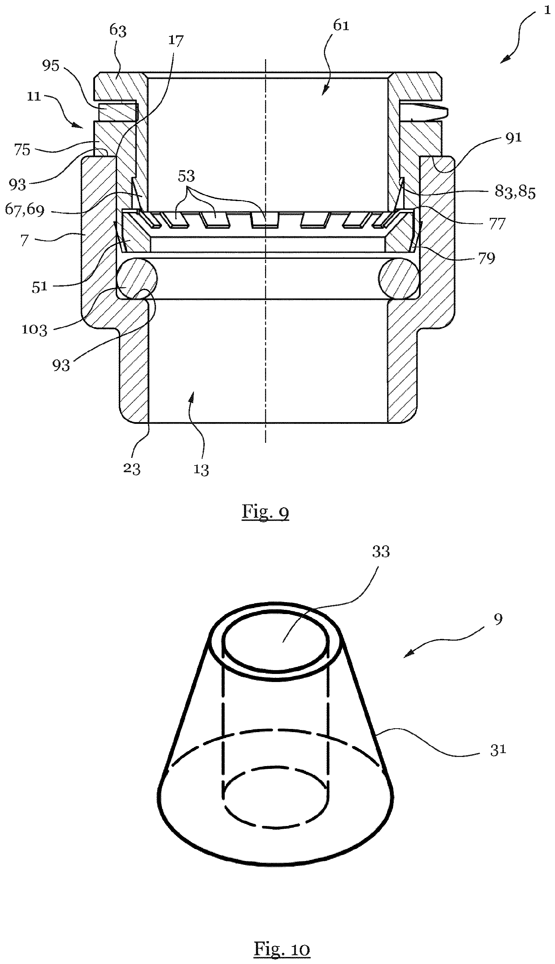

Bei einer Zusammenschau der Figuren 2, 3 und 6 ist zu erkennen, dass die Führungshülse 75 eine der Stülphülse 7 zugewandte Radialfläche 91 besitzt, welche mit einer Stirnfläche 93 des Stülphülse 7 in Kontakt geraten kann, vorzugsweise um eine axiale Position der Führungshülse 75 bezüglich der Stülphülse 7 festzulegen. Die Radialfläche 91 ist am Übergang zwischen Hülsenabschnitt 87 und Endabschnitt 89 gebildet. Die Führungshülse 75 besitzt axialabschnittsweise einen vorzugsweise im Wesentlichen konstanten Außendurchmesser, vorzugsweise im Bereich des Hülsenabschnitts 87, der in der Stülphülse 7, vorzugsweise in dessen Innenraum 13, angeordnet ist, während der mit einer dickeren Wandstärke versehene Endabschnitt 89 außerhalb der Stülphülse 7 sich befindet. Der Außendurchmesser des Hülsenabschnitts 87 ist im Wesentlichen an einem Innendurchmesser der Stülphülse angepasst. Insbesondere bezugnehmend auf Fig. 3 ist ersichtlich, dass die Stülphülse 7 unter Ausbildung einer Auflageschulter 93 für einen Dichtungsring 103 (siehe Fig. 9) einen Profilsprung besitzt, indem sich der Innendurchmesser der Stülphülse 7 sprunghaft reduziert. Die Führungshülse 75 ist im Bereich des größeren Innendurchmessers montiert. Bei montiertem Dichtungsring 103 ist eine Stirnseite der Führungshülse 75, vorzugsweise diejenige Stirnseite, an der der Halteflansch 79 vorgesehen ist, unmittelbar dem Dichtungsring 103 zugewandt. Es ist möglich, dass der Dichtungsring 103 lose auf der umlaufenden Schulter aufliegt und/oder zwischen Auflageschulter 93 und Führungshülse 75 axial verpresst wird.

Die Halte- und Freigabeeinrichtung 11 kann einen Sicherungsring 95 zum Unterbinden einer Betätigung der Halte- und Freigabeeinrichtung 11 besitzen. Der Sicherungsring 95 ist im montierten Zustand (Fig. 1 bis 3) in einem sich zwischen einer der Führungshülse 75 zugewandten Stirnfläche 97 bzw. dem Betätigungsflansch 73 und der Stirnfläche 89 der Führungshülse 75 ergebenen Ringraum 99 positioniert und belegt diesen im Wesentlichen vollständig, um ein axiales Verschieben der Lösehülse 63 relativ zu der Führungshülse 75 zu verhindern. Der Sicherungsring 95 besitzt an den Enden des geschlitzten Rings nach außen vorstehende Betätigungsösen 101, die ein einfaches Entfernen unter radialer Deformation, insbesondere Ausdehnung, des Sicherungsrings 95 erlauben.

In den Fig. 8 und 9 ist eine weitere beispielhafte Ausführung einer erfindungsgemäßen Einzelrohrabdichtung 1 abgebildet, wobei das Kunststoffrohr 3, das Datenkabel 5 und der Dichtungskörper 9 zur besseren Sichtbarkeit der Einzelrohrabdichtung 1 weggelassen wurden. Zur Vermeidung von Wiederholungen wird im Folgenden lediglich auf die sich in Bezug auf die vorhergehenden Ausführungen ergebenden Unterschiede eingegangen. Wie insbesondere in Fig. 8 zu sehen ist, umfasst die erfindungsgemäße Einzelrohrabdichtung 1 keinen Längsschlitz 25 bzw. keine Längsschlitzung 43. Ansonsten ist die in Fig. 8 bzw. 9 abgebildete Einzelrohrabdichtung 1 im Wesentlichen identisch zu der Einzelrohrabdichtung 1 gemäß den Fig. 1 bis 7 ausgeführt. Im Unterschied zu der Einzelrohrabdichtung 1 gemäß der Fig. 1 bis 7 kann die Einzelrohrabdichtung 1 gemäß Fig. 8 und 9 nicht radial an ein bereits verlegtes Kunststoffrohr 3 verlegt werden, bzw. das Kunststoffrohr 3 und/oder das Datenkabel 5 kann nicht radial eingesetzt werden. Fig. 9 stellt eine Schnittansicht gemäß der Linie IX-IX aus Fig. 8 dar. Dabei ist zu erkennen, dass auf der Auflageschulter 93 ein umlaufender Dichtungsring 103 angeordnet ist, der lose auf der Auflageschulter 93 aufliegt und somit ein gewisses axiales Spiel innerhalb des Innenraums 13 der Stülphülse 7 besitzt. Ein Vorteil der Ausführung der Fig. 8 und 9 liegt in der erhöhten Stabilität der Einzelrohrabdichtung 1 aufgrund des nichtvorhandenen Schlitzes 43 bzw. 25. Dies kann bei bestimmten Einsatzorten bzw. Anwendungsgebieten erforderlich sein, bei der mit erhöhten Belastungen auf die Einzelrohrabdichtung 1 von außen zu rechnen ist. Um die Steifigkeit der Einzelrohrabdichtung 1 bzw. der Stülphülse 7 zu erhöhen, kann sowohl bei der Ausführung mit Schlitz bzw. Schlitzung 25, 43 als auch bei der Ausführung ohne Schlitz bzw. Schlitzung außenseitig der Stülphülse 7 umfänglich und insbesondere im Bereich der Stirnseite angeordnete Versteifungsrippen vorzusehen. Selbstverständlich kann das Material derart variiert werden, dass eine erhöhte Steifigkeit bereitgestellt ist. Eine weitere Möglichkeit besteht darin, diejenige Stirnseite, an der die Austrittsöffnung 23 vorgesehen ist, mit einer insbesondere im Vergleich zur restlichen Stülphülse 7 größeren Wandstärke zu versehen, um wiederum in diesem Bereich, der sich als besonders relevant im Hinblick auf die Steifigkeit herausgestellt hat, die Steifigkeit der Stülphülse 7 zu erhöhen.

In Fig. 10 ist eine weitere Ausführungsform eines Dichtungskörpers 9 dargestellt, der insbesondere mit der erfindungsgemäßen Einzelrohrabdichtung 1 gemäß Fig. 8 und 9 verwendet werden kann. Im Gegensatz zu der Ausführungsform des Dichtungskörpers 9 gemäß Fig. 4 besitzt diese keinen zylindrischen Grundkörper 35, sondern ausschließlich den Trichterabschnitt 31, der kegelstumpfförmig gebildet ist. Ein weiterer Unterschied besteht darin, dass der Dichtungskörper 9 nicht längsgeschlitzt ist, sondern eine vollumfängliche Materialstruktur besitzt. Erneut bezugnehmend auf Fig. 1 ist ersichtlich, dass im Falle des Vorsehens eines Dichtungslängsschlitzes 39 am Dichtungskörper 9, der selbstverständlich auch bei der in Fig. 10 abgebildeten vollständig kegelstumpfförmigen Dichtungskörper vorhanden sein kann, der Dichtungslängsschlitz 39 nicht im Bereich des Längsschlitzes 25 bzw. der Längsschlitzung 43 positioniert ist. Dabei wird unter anderem vermieden, dass von außen Schmutz und Flüssigkeiten oder sonstige Partikel über den Längsschlitz 39 zu dem Datenkabel 5 gelangen können.

### Bezugszeichenliste

- 1: Einzelrohrabdichtung
- 3: Kunststoffrohr
- 5: Datenkabel
- 7: Stülphülse
- 9: Dichtungskörper
- 11: Halte- und Freigabeeinrichtung
- 13: Innenraum
- 15: Endabschnitt
- 17: Einstecköffnung
- 19: Radialanschlag
- 21: Innenmantel
- 23: Austrittsöffnung
- 25: Längsschlitz
- 27, 29: Schlitzgrenzfläche
- 31: Stirnabschnitt
- 33: Durchführöffnung
- 35: Grundkörper
- 37: Stirnfläche
- 39: Dichtungslängsschlitz
- 41: Radialabsatz
- 43: Längsschlitzung
- 45, 47: Schlitzgrenzfläche
- 49: Radialvorsprung
- 51: Krallenteil
- 53: Kralle
- 55: Innenmantel
- 57: Filmscharnier
- 59: Laschenoberfläche
- 61: Durchführkanal
- 63: Lösehülse
- 65: Zylinderabschnitt
- 67: Betätigungsring
- 69: Außenfläche
- 71: Betätigungsflansch
- 73: Auflagefläche
- 75: Führungshülse
- 77: Aufnahme
- 79: Halteflansch
- 81: Innenumfang
- 83: Radialvorsprung
- 85: Radialabsatz
- 87: Hülsenabschnitt
- 89: Endabschnitt
- 91: Radialfläche
- 93: Auflageschulter
- 95: Sicherungsring
- 97: Stirnfläche
- 99: Ringraum
- 101: Betätigungsöse
- 103: Dichtungsring

- A: Axialrichtung
- R: Radialrichtung

## Patentansprüche

1. Einzelrohrabdichtung (1) zum Montieren an einen Endabschnitt (15) eines starren Kunststoffrohrs (3), wie eines Mikrorohrs, das einen Innenkanal zum Aufnehmen von wenigstens einem Datenkabel (5), wie einem Glasfaserkabel, aufweist, umfassend:
- eine zumindest teilzylindrische Stülphülse (7), die aus einem starren Material, wie Kunststoff, gebildet ist und einen Innenraum definiert, in den der Endabschnitt (15) einsteckbar ist, und eine Einstecköffnung (17) zum axialen Einführen des Endabschnitts in den Innenraum sowie eine Austrittsöffnung (23) aufweist, durch die hindurch sich das Datenkabel (5) aus dem Innenraum axial erstrecken kann;
- einen elastisch verformbaren Dichtungskörper (9), der über die Einstecköffnung (17) in den Innenraum eingesetzt ist und einen dem Innenkanal des Kunststoffrohres zugewandten kegelstumpfförmigen oder kegelförmigen Stirnabschnitt (31), der zum Abdichten des Innenkanals geformt ist, und eine Durchführöffnung für das Datenkabel (5) aufweist; und
- eine axial über die Einstecköffnung (17) teilweise in den Innenraum eingesetzte Halte- und Freigabeeinrichtung (11), die in einem Passivzustand eine radiale Haltekraft auf das Kunststoffrohr (3) ausübt, um das Kunststoffrohr (3) axial festzuhalten, und derart betätigbar ist, dass die radiale Haltekraft im Wesentlichen aufgehoben ist, um das Kunststoffrohr (3) freizugeben.

2. Einzelrohrabdichtung (1) nach Anspruch 1, wobei die Halte- und Freigabeeinrichtung (11) derart betätigbar ist, dass das Kunststoffrohr (3) vorzugsweise bei aneinandermontierter Stülphülse (7) und Halte- und Freigabeeinrichtung (11) von der Stülphülse (7) demontierbar, insbesondere aus dem Innenraum axial herausziehbar, ist.

3. Einzelrohrabdichtung (1) nach Anspruch 1 oder 2, wobei im Bereich der Austrittsöffnung (23) ein Radialanschlag (19) für das Kunststoffrohr (3) vorgesehen ist, der ein axiales Verschieben des in dem Innenraum eingesteckten Endabschnitts des Kunststoffrohrs (3) begrenzt, wobei insbesondere zum Aufbau der Abdichtung der Dichtungskörper (9) zwischen dem Radialanschlag (19) und dem Endabschnitt (15) axial verpresst ist.

4. Einzelrohrabdichtung (1) nach einem der vorstehenden Ansprüche, wobei die Stülphülse (7) einen Längsschlitz (25) aufweist, längs dem das Kunststoffrohr (3) durch radiales Einsetzen in die Stülphülse (7) derart verlegbar ist, dass es an der Einstecköffnung, im Verlauf der Gesamtlängserstreckung der Stülphülse (7) und im Bereich der Austrittsöffnung (23) im Wesentlichen parallel zur Längsachse der Stülphülse (7) liegt.

5. Einzelrohrabdichtung (1) nach einem der vorstehenden Ansprüche, wobei die Halte- und Freigabeeinrichtung (11) ein Krallenteil (51) mit wenigstens einer nach innen ragenden Kralle (53) aufweist, die derart elastisch deformierbar ist und/oder derart elastisch an dem Krallenteil (51) angebracht ist, dass beim Einsetzen des Kunststoffrohrs (3) in das Krallenteil (51) die wenigstens eine Kralle (53) unter Ausbildung einer Deformationsrückstellkraft aufgespreizt ist, wobei insbesondere das Krallenteil (51) einen Durchführkanal für das Kunststoffrohr (3) und/oder eine Längsschlitzung (43) aufweist, längs der das Kunststoffrohr (3) vorzugsweise unter elastischer Deformation des Krallenteils (51) durch radiales Einsetzen in das Krallenteil (51) derart verlegbar ist, dass es längs des Krallenteils (51) im Wesentlichen parallel zu dessen Längsachse verläuft, wobei insbesondere der Längsschlitz (25) und die Längsschlitzung (43) im montierten Zustand die gleiche Umfangsdimension besitzen und/oder im Wesentlichen fluchtend zueinander angeordnet sind.

6. Einzelrohrabdichtung (1) nach einem der Ansprüche 4 bis 5, wobei eine in Umfangsrichtung bemessene Weite des Längsschlitzes (25) und gegebenenfalls der Längsschlitzung (43) entlang der Längserstreckung der Stülphülse (7) und gegebenenfalls des Krallenteils (51) im Wesentlichen konstant ist und/oder im Bereich von 30 % bis 80 % bezüglich eines Außendurchmessers der Stülphülse (7) beträgt.

7. Einzelrohrabdichtung (1) nach einem der Ansprüche 5 bis 6, wobei das Krallenteil (51) im Wesentlichen als Ring ausgebildet ist, von dessen Innenmantel sich die wenigstens eine Kralle (53) im undeformierten Zustand unter einem Winkel im Bereich von 30° bis 90° bezüglich der Längsachse der Stülphülse (7) in den Durchführkanal erstreckt, wobei insbesondere die wenigstens eine Kralle (53) mittels eines Filmscharniers an den Innenmantel des Krallenteils (51) angebracht ist und/oder als im Wesentlichen rechteckige Lasche geformt ist, wobei insbesondere eine Vielzahl von in Umfangsrichtung gleichmäßig verteilten und in einem Abstand zueinander angeordneten Krallen (53) zur Bildung eines Krallenrings an dem Krallenteil (51) angeordnet ist.

8. Einzelrohrabdichtung (1) nach einem der vorstehenden Ansprüche, wobei die Halte- und Freigabeeinrichtung (11) eine Lösehülse (63) zum Freigeben des Kunststoffrohrs (3) von der Stülphülse (7) aufweist, die insbesondere derart mit dem Krallenteil (51) zusammenwirkt, dass die Lösehülse (63) bei Betätigung der Lösehülse (63) axial in Richtung des Krallenteils (51) verschoben wird, um die wenigstens eine Kralle (53) zu betätigen, insbesondere derart zu betätigen, dass die radiale Haltekraft im Wesentlichen aufgehoben ist, wobei insbesondere die wenigstens eine Kralle (53) aufgespreizt ist, wobei insbesondere die Lösehülse (63) einen im Wesentlichen hohlzylindrischen Zylinderabschnitt (65) zum Betätigen der wenigstens eine Kralle, wobei insbesondere der Zylinderabschnitt (65) einen stirnseitigen Betätigungsring mit einem sich zur Stirnseite hin verjüngenden Querschnitt zum kontinuierlichen Aufspreizen der wenigstens einen Kralle (53) besitzt, und einen stirnseitigen, dem Krallenteil (51) abgewandten Betätigungsflansch zum manuellen Betätigen der Lösehülse (63) umfasst, wobei insbesondere der Betätigungsflansch sich umlaufend, radial von dem Zylinderabschnitt (65) weg erstreckt.

9. Einzelrohrabdichtung (1) nach Anspruch 8, wobei die Halte- und Freigabeeinrichtung (11) eine Führungshülse (75) zum axialen Führen der Lösehülse (63) und vorzugsweise zum axialen Halten des Krallenteils (51) umfasst, wobei insbesondere die Führungshülse (75) eine stirnseitige Aufnahme zum Aufnehmen des Krallenteils (51) aufweist, die einen nach innen in Richtung der Längsachse geneigten Halteflansch zum axialen Sichern des Krallenteils (51) in der Führungshülse (75) besitzt, und an einem Innenumfang einen Radialvorsprung besitzt, der eine axiale Relativbewegung von Führungshülse (75) und Lösehülse (63) begrenzt und/oder mit einem am Außenumfang der Lösehülse, insbesondere des Betätigungsabschnitts, ausgebildeten Radialabsatz zusammenwirkt, um einen Axialanschlag zu bilden.

10. Einzelrohrabdichtung (1) nach Anspruch 9, wobei die Führungshülse (75) abschnittsweise einen vorzugsweise im Wesentlichen konstanten Außendurchmesser besitzt, der an einen Innendurchmesser der Stülphülse (7) angepasst ist, wobei insbesondere die Führungshülse (75) in die Stülphülse (7) eingesteckt ist, vorzugsweise derart eingesteckt ist, dass eine Relativrotation von Führungshülse (75) und Stülphülse (7) verhindert ist.

11. Einzelrohrabdichtung (1) nach einem der Ansprüche 9 bis 10, wobei die Stülphülse (7) unter Ausbildung einer Auflageschulter für einen Dichtungsring, der vorzugsweise lose auf der umlaufenden Auflageschulter aufliegt, einen Profilsprung besitzt, an dem sich der Innendurchmesser der Stülphülse (7) sprunghaft reduziert, wobei insbesondere die Führungshülse (75) im Bereich des größeren Innendurchmessers montiert ist und/oder unmittelbar dem Dichtungsring zugewandt ist.

12. Einzelrohrabdichtung (1) nach einem der Ansprüche 9 bis 11, wobei die Halte- und Freigabeeinrichtung (11) einen Sicherungsring zum Unterbinden einer Betätigung der Halte- und Freigabeeinrichtung (11) besitzt, wobei insbesondere der Sicherungsring in einem sich zwischen einer Stirnfläche der Führungshülse (75) und dem Betätigungsflansch ergebenden Ringraum angeordnet ist und den Ringraum im Wesentlichen vollständig belegt, um ein axiales Verschieben der Lösehülse (63) zu verhindern, wobei insbesondere der Sicherungsring derart bezüglich eines Außendurchmessers der Lösehülse (63) dimensioniert ist, dass der Sicherungsring im montierten Zustand eine radiale Haltekraft auf die Lösehülse (63) ausübt und/oder radial elastisch deformierbar ist, um von der Lösehülse (63) demontierbar zu sein.

13. Einzelrohrabdichtung (1) nach einem der vorstehenden Ansprüche, wobei die Halte- und Freigabeeinrichtung (11) derart auf die Stülphülse (7) formabgestimmt ist, dass eine Rotation der Stülphülse (7) relativ zu der Halte- und Freigabeeinrichtung (11) verhindert ist.

14. Einzelrohrabdichtung (1) nach einem der vorstehenden Ansprüche, wobei der Dichtungskörper (9) einen an den Stirnabschnitt (31) anschließenden, im Wesentlichen zylindrischen Grundkörper (35) besitzt und der kegel- oder kegelstumpfförmige Stirnabschnitt (31) als Trichterabschnitt geformt ist, wobei insbesondere der Dichtungskörper (9), vorzugsweise der Grundkörper (35) und der Trichterabschnitt, in Längsrichtung geschlitzt ist, um in Radialrichtung an ein Datenkabel (5) montierbar zu sein oder um ein Datenkabel (5) radial einzusetzen, wobei insbesondere eine Längsabmessung des Grundkörpers (35) größer ist als eine Längsabmessung des Trichterabschnitts, wobei insbesondere der Dichtungskörper (9) derart dimensioniert ist, dass beim Aufschieben des Endabschnitts des Kunststoffrohrs (3) auf den Trichterabschnitt der Dichtungskörper (9), insbesondere im Wesentlichen der Grundkörper, axial komprimiert und radial ausgedehnt wird, insbesondere derart, dass eine radiale Verpressung mit einem Innenumfang der Stülphülse (7) realisiert ist.

15. Einzelrohrabdichtung (1) nach einem der vorstehenden Ansprüche, wobei die Einzelrohrabdichtung (1) dazu ausgebildet ist, eine Dichtigkeit zwischen Dichtungskörper (9) und Kunststoffrohr (3) und/oder zwischen Dichtungskörper (9) und Datenkabel (5) gegenüber einem Innendruck von bis zu 0,5 bar innerhalb des Kunststoffrohrs (3) bereitzustellen.

16. Kunststoffrohr (3), wie Mikrorohr, umfassend einen Innenkanal zum Aufnehmen von wenigstens einem Datenkabel (5), wie einem Glasfaserkabel, und eine nach einem der vorstehenden Ansprüche ausgebildete Einzelrohrabdichtung (1), die an einen Endabschnitt (15) des Kunststoffrohrs (3) montiert ist.

## Claims

1. Single tube sealing (1) for mounting on an end portion (15) of a rigid plastic tube (3), such as a micro-tube, the plastic tube (3) having an inner channel for receiving at least one data cable (5), such as a fiber optic cable, the single tube sealing (1) comprising:
- an at least partially cylindrical sleeve (7), formed of a rigid material, such as plastic, and defining an internal space into which the end portion (15) is insertable and an insertion opening (17) for axial insertion of the end portion into the internal space and exit opening (23) through which the data cable (5) can extend axially out of the internal space;
- an elastically deformable sealing body (9) inserted into the internal space through the insertion opening (17) and having a frustoconical or conical end section (31) facing the inner channel of the plastic tube and formed for sealing the inner channel and a passage opening for the data cable (5); and
- a holding and releasing device (11) partially axially inserted into the internal space through the insertion opening (17), which in a passive state exerts a radial holding force on the plastic tube (3) to axially hold the plastic tube (3) and is operable in such a way that the radial holding force is substantially repealed to release the plastic tube (3).

2. Single tube sealing (1) according to claim 1, wherein the holding and releasing device (11) is operable in such a way that the plastic tube (3) is demountable from the sleeve (7), in particular axially withdrawable from the internal space, preferably when the sleeve (7) and the holding and releasing device (11) are mounted together.

3. Single tube sealing (1) according to claim 1 or 2, wherein a radial stop (19) for the plastic tube (3) is provided in the region of the exit opening (23), which limits an axial displacement of the end section of the plastic tube (3) inserted into the internal space, wherein in particular the sealing body (9) is axially pressed between the radial stop (19) and the end section (15) for building up the sealing.

4. Single tube sealing (1) according to one of the preceding claims, wherein the sleeve (7) comprises a longitudinal slot (25) along which the plastic tube (3) is layable by radial insertion into the sleeve (7) in such a way that the plastic tube lies substantially parallel to the longitudinal axis of the sleeve (7) at the insertion opening, in the course of the overall longitudinal extend of the sleeve (7) and in the region of the exit opening (23).

5. Single tube sealing (1) according to one of the preceding claims, wherein the holding and releasing device (11) comprises a claw part (51) with at least one inwardly projecting claw (53) which is elastically deformable and/or elastically attached to the claw part(51) in such a way that when inserting the plastic tube (3) into the claw part (51) the at least one claw (53) is spread open while forming a deformation return force, wherein in particular the claw part (51) comprises a passage channel for the plastic tube (3) and/or a longitudinal slit (43) along which the plastic tube (3) is layable by radial insertion into the claw part (51), preferably with elastic deformation of the claw part (51), in such a way that along the claw part (51) the plastic tube lies substantially parallel to its longitudinal axis, wherein in particular the longitudinal slot (25) and the longitudinal slit (43) have the same circumferential dimension in the mounted state and/or are arranged substantially aligning to each other.

6. Single tube sealing (1) according to one of claims 4 to 5, wherein a width in circumferential direction of the longitudinal slot (25) and optionally the longitudinal slit (43) is substantially constant along the longitudinal extension of the sleeve (7) and optionally of the claw part (51) and/or is in the range of 30 % to 80 % with respect to an outer diameter of the sleeve (7).

7. Single tube sealing (1) according to one of claims 5 to 6, wherein the claw part (51) is formed substantially as a ring, from the inner surface of which the at least one claw (53) in the undeformed state extends into the passage channel at an angle in the range of 30° to 90° with respect to the longitudinal axis of the sleeve (7), wherein in particular the at least one claw (53) is attached to the inner surface of the claw part (51) by means of a film hinge and/or is formed as a substantially rectangular lug, wherein in particular a plurality of claws (53) uniformly distributed in circumferential direction and arranged at a distance from each other are formed on the claw part (51) to form a claw ring.

8. Single tube sealing (1) according to one of the preceding claims, wherein the holding and releasing device (11) comprises a release sleeve (63) for releasing the plastic tube (3) from the sleeve (7), which in particular cooperates with the claw part (51) in such a way that the release sleeve (63), when the release sleeve (63) is actuated (63), is axially displaced to actuate the at least one claw (53), in particular actuate in such a way that the radial holding force is substantially repealed, wherein in particular the at least one claw (53) is spread open, wherein in particular the release sleeve (63) comprises a substantially hollow-cylindrical cylinder section (65) for actuating the at least one claw, wherein in particular the cylinder section (65) comprises an end-face sided actuating ring with a cross section tapering towards the end face for continuously spreading out of the at least one claw (53), und an end-face sided actuating flange facing away from the claw part (51) for manually actuating the release sleeve (63), wherein in particular the actuating flange extends circumferentially, radially away from the cylinder section (65).

9. Single tube sealing (1) according to claim 8, wherein the holding and releasing device (11) comprises a guide sleeve (75) for axially guiding the release sleeve (63) and preferably for axially holding the claw part (51), wherein in particular the guide sleeve (75) comprises an end-face sided reception for receiving the claw part (51), which has a holding flange inclined inwardly in direction of the longitudinal axis for axially securing the claw part (51) in the guide sleeve (75), and a radial projection on an inner circumference, which limits an axial relative movement of the guide sleeve (75) and the release sleeve (63) and/or interacts with a radial protrusion formed on an outer circumference of the release sleeve, in particular the actuating section to form an axial stop.

10. Single tube sealing (1) according to claim 9, wherein the guide sleeve (75) has section-wise a preferably substantially constant outer diameter adapted to an inner diameter of the sleeve (7), wherein in particular the guide sleeve (75) is inserted into the sleeve (7), preferably inserted in such a way that a relative rotation of the guide sleeve (75) and the sleeve (7) is prevented.

11. Single tube sealing (1) according to one of claims 9 to 10, wherein the sleeve (7) comprises a profile step forming a support shoulder for a sealing ring, which preferably rests loosely on the circumferential support shoulder, at which the inner diameter of the sleeve (7) is reduced abruptly, wherein in particular the guide sleeve (75) is mounted in the region of the larger inner diameter and/or faces the sealing ring directly.

12. Single tube sealing (1) according to one of claims 9 to 11, wherein the holding and releasing device (11) comprises a locking ring for preventing an actuation of the holding and releasing device (11), wherein in particular the locking ring is arranged in an annular space resulting between an end face of the guide sleeve (75) and the actuation flange and occupies the annular space substantially completely to prevent axial displacement of the release sleeve (63), wherein in particular the locking ring is dimensioned with respect to an outer diameter of the release sleeve in such a way that the locking ring, in the mounted state, exerts a radial holding force on the release sleeve (63) and/or is radially elastically deformable to be demountable from the release sleeve (63).

13. Single tube sealing (1) according to one of the preceding claims, wherein the holding and releasing device (11) is shape-adapted to the sleeve (7) in such a way that a rotation of the sleeve (7) relative to the holding and releasing device (11) is prevented.

14. Single tube sealing (1) according to one of the preceding claims, wherein the sealing body (9) comprises an substantially cylindrical base body (35) adjoining the end section (31) and the conical or frustoconical end section (31) is formed as a funnel section, wherein in particular the sealing body (9), preferably the base body (35) and the funnel section, is slotted in longitudinal direction to be mountable in radial direction to a data cable (5) or to radially insert a data cable (5), wherein in particular a longitudinal dimension of the base body (35) is larger than a longitudinal dimension of the funnel section, wherein in particular the sealing body (9) is dimensioned in such a way that when pushing the end section of the plastic tube (3) onto the funnel section the sealing body (9), in particular substantially the base body, is axially compressed and radially expanded, in particular in such a way that a radial compression with an inner circumference of the sleeve (7) is realized.

15. Single tube sealing (1) according to one of the preceding claims, wherein the single tube sealing (1) is configured to provide a sealing between the sealing body (9) and the plastic tube (3) and/or between the sealing body (9) and the data cable (5) against an internal pressure of up to 0,5 bar within the plastic tube (3).

16. Plastic tube (3), such as micro tube, comprising an inner channel for receiving at least one data cable (5), such as an optic fiber cable, and a single tube sealing (1) configured according to one of the preceding claims mounted to an end section (15) of the plastic tube (3).

## Revendications

1. Joint d'étanchéité du tube individuel (1) pour le montage sur une section d'extrémité (15) d'un tube en matière plastique (3) rigide, comme un microtube, qui comporte un conduit intérieur pour recevoir au moins un câble de données (5), comme un câble en fibre optique, comprenant :
- au moins un fourreau partiellement cylindrique (7) qui est formé par un matériau rigide, comme de la matière plastique, et définit un espace intérieur dans lequel la section d'extrémité (15) peut être inséré et une ouverture d'insertion (17) pour l'introduction axiale de la section d'extrémité dans l'espace intérieur ainsi qu'une ouverture de sortie (23) à travers laquelle le câble de données (5) peut s'étendre axialement depuis l'espace intérieur,
- un corps d'étanchéité (9) élastiquement déformable, qui est inséré par l'ouverture d'insertion (17) dans l'espace intérieur et une section frontale (31) tronconique ou conique tournée vers le conduit intérieur du tube en matière plastique, qui est formée pour étanchéifier le conduit intérieur et une ouverture de passage pour le câble de données (5), et
- un système de maintien et de déblocage (11) inséré par l'ouverture d'insertion (17) partiellement dans l'espace intérieur, qui exerce dans un état passif une force de retenue radiale sur le tube en matière plastique (3) pour maintenir fermement axialement le tube en matière plastique (3) et peut être actionné de telle manière que la force de retenue radiale est pour l'essentiel supprimée pour débloquer le tube en matière plastique (3).

2. Joint d'étanchéité du tube individuel (1) selon la revendication 1, sachant que le système de maintien et de déblocage (11) peut être actionné de telle manière que le tube en matière plastique (3) peut être démonté du fourreau (7), en particulier axialement retiré de l'espace intérieur, de préférence lorsque le fourreau (7) et le système de maintien et de déblocage (11) sont montés l'un à côté de l'autre.

3. Joint d'étanchéité du tube individuel (1) selon la revendication 1 ou 2, sachant que dans la zone de l'ouverture de sortie (23) est prévue une butée radiale (19) pour le tube en matière plastique (3), qui limite un déplacement axial de la section d'extrémité insérée dans l'espace intérieur du tube en matière plastique (3), sachant en particulier que pour le montage du joint d'étanchéité, le corps d'étanchéité (9) est axialement comprimé entre la butée radiale (19) et la section d'extrémité (15).

4. Joint d'étanchéité du tube individuel (1) selon l'une quelconque des revendications précédentes, sachant que le fourreau (7)comporte une fente longitudinale (25), le long de laquelle le tube en matière plastique (3) peut être posé par insertion radiale dans le fourreau (7) de telle manière qu'il se trouve sur l'ouverture d'insertion, au cours de l'extension longitudinale totale du fourreau (7) et dans la zone de l'ouverture de sortie (23) pour l'essentiel parallèlement à l'axe longitudinal du fourreau (7).

5. Joint d'étanchéité du tube individuel (1) selon l'une quelconque des revendications précédentes, sachant que le système de maintien et de déblocage (11) comporte une parie à griffe (51) avec au moins une griffe (53) dépassant vers l'intérieur qui peut être élastiquement déformée et/ou est placée élastiquement sur la partie à griffes (51) de telle manière que lors de l'insertion du tube en matière plastique (3) dans la partie à griffes (51), au moins une griffe (53) est écartée par formation d'une force de rappel de déformation, sachant en particulier que la partie à griffes (51) comporte un conduit de passage pour le tube en matière plastique (3) et/ou une incision longitudinale (43) le long de laquelle le tube en matière plastique (3) peut être posé dans la partie à griffes (51) de préférence sous déformation élastique de la partie à griffes (51) par insertion radiale de telle manière qu'il passe le long de la partie à griffes (51) pour l'essentiel parallèlement à l' axe longitudinal de celui-ci, sachant en particulier que la fente longitudinale (25) et l'incision longitudinale (43) possèdent la même dimension périphérique à l'état monté et/ou sont disposées pour l'essentiel alignées l'une par rapport à l'autre.

6. Joint d'étanchéité du tube individuel (1) selon l'une quelconque des revendications 4 à 5, sachant qu'une largeur mesurée dans le sens périphérique de la fente longitudinale (25) et le cas échéant l'incision longitudinale (43), est pour l'essentiel constante le long de l'extension longitudinale du fourreau (7) et le cas échéant de la partie à griffes (51) et/ou se situe dans une plage de 30 % à 80 % eu égard à un diamètre extérieur du fourreau (7).

7. Joint d'étanchéité du tube individuel (1) selon l'une quelconque des revendications 5 à 6, sachant que la partie à griffes (51) est constituée pour l'essentiel comme une bague, au moins une griffe (53) s'étendant de son enveloppe intérieure dans un état non déformé sous un angle se situant dans une plage de 30° à 90° eu égard à l'axe longitudinal du fourreau (7) dans le conduit de passage, sachant en particulier qu'au moins une griffe (53) est placée sur l'enveloppe intérieure de la partie à griffes (51) au moyen d'une charnière à film et/ou formée pour l'essentiel comme une attache rectangulaire, sachant en particulier qu'une pluralité de griffes (53) uniformément réparties en direction périphérique et disposées à distance les unes des autres est disposée pour former une couronne de griffes sur la partie à griffes (51).

8. Joint d'étanchéité du tube individuel (1) selon l'une quelconque des revendications précédentes, sachant que le système de maintien et de déblocage (11) comporte un manchon de déblocage (63) pour libérer le tube en matière plastique (3) du fourreau (7), qui coopère en particulier avec la partie à griffes (51) de telle manière que le manchon de déblocage (63) est déplacé axialement en direction de la partie à griffes (51) en actionnant le manchon de déblocage (63) pour actionner au moins une griffe (53), en particulier pour actionner de telle manière que la force de retenue radiale est pour l'essentiel supprimée, sachant en particulier qu'au moins une griffe (53) est écartée, sachant en particulier que le manchon de déblocage (63) comprend une section cylindrique (65) pour l'essentiel cylindrique creuse pour actionner au moins une griffe, sachant en particulier que la section cylindrique (65) possède une bague d'actionnement frontale avec une section diminuant vers la face avant pour l'écartement continu d'au moins une griffe (53) et comprend une bride d'actionnement frontale, opposée à la partie à griffes (51) pour actionner manuellement le manchon de déblocage (63), sachant en particulier que la bride d'actionnement s'étend en périphérie, s'éloignant radialement de la section cylindrique (65).

9. Joint d'étanchéité du tube individuel (1) selon la revendication 8, sachant que le système de maintien et de déblocage (11) comprend un manchon de guidage (75) pour le guidage axial du manchon de déblocage (63) et de préférence pour le maintien axial de la partie à griffes (51), sachant en particulier que le manchon de guidage (75) comporte un logement frontal pour recevoir la partie à griffes (51), qui possède une bride de maintien inclinée vers l'intérieur en direction de l'axe longitudinal pour la fixation axiale de la partie à griffes (51) dans le manchon de guidage (75) et possède sur une périphérie intérieure une saillie radiale, qui limite un mouvement relatif axial du manchon de guidage (75) et du manchon de déblocage (63) et/ou coopère avec un gradin radial constitué sur la périphérie extérieure du manchon de déblocage, en particulier de la section d'actionnement, pour former une butée axiale.

10. Joint d'étanchéité du tube individuel (1) selon la revendication 9, sachant que le manchon de guidage (75) possède par endroits un diamètre extérieur de préférence pour l'essentiel constant, qui est adapté à un diamètre intérieur du fourreau (7), sachant en particulier que le manchon de guidage (75) est emboîté dans le fourreau (7), emboîté de préférence de telle manière qu'une rotation relative du manchon de guidage (75) et du fourreau (7) est évitée.

11. Joint d'étanchéité du tube individuel (1) selon l'une quelconque des revendications 9 à 10, sachant que le fourreau (7), par formation d'un épaulement d'appui pour une bague d'étanchéité, qui repose de préférence librement sur l'épaulement d'appui périphérique, possède une saillie profilée, sur laquelle se réduit brusquement le diamètre intérieur du fourreau (7), sachant en particulier que le manchon de guidage (75) est monté dans la zone du diamètre intérieur plus grand et/ou est tourné directement vers la bague d'étanchéité.

12. Joint d'étanchéité du tube individuel (1) selon l'une quelconque des revendications 9 à 11, sachant que le système de maintien et de déblocage (11) possède un jonc d'arrêt pour empêcher un actionnement du système de maintien et de déblocage (11), sachant en particulier que le jonc d'arrêt est disposé dans un espace annulaire se formant entre une surface frontale du manchon de guidage (75) et la bride d'actionnement et occupe l'espace annulaire pour l'essentiel complètement pour éviter un déplacement axial du manchon de déblocage (63), sachant en particulier que le jonc d'arrêt est dimensionné eu égard à un diamètre extérieur du manchon de déblocage (63) de telle manière que le jonc d'arrêt exerce à l'état monté une force de retenue radiale sur le manchon de déblocage (63) et/ou est radialement déformable pour être démonté du manchon de déblocage (63).

13. Joint d'étanchéité du tube individuel (1) selon l'une quelconque des revendications précédentes, sachant que le système de maintien et de déblocage (11) est adapté en forme au fourreau (7) de telle manière qu'une rotation du fourreau (7) est évitée par rapport au système de maintien et de déblocage (11).

14. Joint d'étanchéité du tube individuel (1) selon l'une quelconque des revendications précédentes, sachant que le corps d'étanchéité (9) possède un corps de base (35) pour l'essentiel cylindrique, se raccordant à la section frontale (31) et la section frontale (31) conique ou tronconique est formée comme une section en entonnoir, sachant en particulier que le corps d'étanchéité (9), de préférence le corps de base (35) et la section en entonnoir, sont fendus en direction longitudinale pour être montés en direction radiale sur un câble de données (5) ou pour insérer radialement à câble de données (5), sachant en particulier qu'une dimension longitudinale du corps de base (35) est plus grande qu'une dimension longitudinale de la section en entonnoir, sachant en particulier que le corps d'étanchéité (9) est dimensionné de telle manière que lors du déplacement de la section d'extrémité du tube en matière plastique (3) sur la section en entonnoir, le corps d'étanchéité (9), en particulier pour l'essentiel le corps de base, est axialement comprimé et radialement dilaté, en particulier de telle manière qu'une compression radiale est réalisée avec une périphérie intérieure du fourreau (7).

15. Joint d'étanchéité du tube individuel (1) selon l'une quelconque des revendications précédentes, sachant que le joint d'étanchéité du tube individuel (1) est constitué pour fournir une étanchéité entre un corps d'étanchéité (9) et un tube en matière plastique (3) et/ou entre un corps d'étanchéité (9) et un câble de données (5) par rapport à une pression intérieure allant jusqu'à 0,5 bar à l'intérieur du tube en matière plastique (3).

16. Tube en matière plastique (3) comme un microtube, comprenant un conduit intérieur pour recevoir au moins un câble de données (5), comme un câble en fibre optique et un joint d'étanchéité du tube individuel (1) constitué selon l'une quelconque des revendications précédentes, qui est monté sur une section d'extrémité (15) du tube en matière plastique (3).
